# EUROPEAN PATENT APPLICATION

(11) **EP 4 755 223 A1**
(43) Date of publication of application: **10.06.2026**
(21) Application number: 24849521.0
(22) Date of filing: 26.07.2024
(51) Int. Cl.: A24F 40/485, A24F 40/40, A24F 40/42, A24F 40/46, A24F 40/50, A24F 40/60, A24F 40/90, A24F 40/05

(54) **AEROSOL-GENERATING DEVICE**

(30) Priority: 31.07.2023 KR 20230099921; 26.12.2023 KR 20230191886
(71) Applicant: KT&G Corporation, Daedeok-gu Daejeon 34337 (KR)
(72) Inventor: WOO, Young Min, Hwaseong-si, Gyeonggi-do 18391 (KR); KIM, Jae Hyuk, Seoul 06352 (KR); PARK, Sang Cheol, Suwon-si, Gyeonggi-do 16469 (KR); SEO, Jang Won, Daejeon 34023 (KR); LEE, Won Kyeong, Guri-si, Gyeonggi-do 11920 (KR); JANG, Chul Ho, Bucheon-si, Gyeonggi-do 14725 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010953
(87) International publication number: WO 2025/028952

(57) **Abstract**

An aerosol generating device according to an embodiment includes a housing including a first accommodation space for accommodating an aerosol generating article, a second accommodation space for accommodating a cartridge in which an aerosol generating material is stored, and a battery accommodation space, a first airflow passage arranged inside the housing and connecting the first accommodation space and the second accommodation space to each other, a first heat dissipation member arranged between the first airflow passage and the battery accommodation space to absorb heat inside the battery accommodation space, and a battery detachably coupled to the battery accommodation space.

## Description

### Technical Field

Embodiments relate to an aerosol generating device including a detachable battery.

### Background Art

Recently, there has been an increasing demand for alternative methods that reduce disadvantages of general cigarettes. For example, there has been an increasing demand for a device (or an "aerosol generating device") that generates an aerosol by heating an aerosol generating material (or an "aerosol generating article") by using the aerosol generating device, instead of a method of generating an aerosol by burning a cigarette.

The aerosol generating device may include a battery for supplying power and a heater generating heat when power is supplied thereto and may generate an aerosol by heating an aerosol generating material through the heater. In particular, the aerosol generating device may use an integral battery for the minimization of a device. However, recently, research into an aerosol generating device using a detachable battery in order to increase user's convenience has been actively conducted.

### Disclosure of Invention

### Technical Problem

Batteries of aerosol generating devices may generate heat when used or charged. In particular, when a battery of an aerosol generating device ages or is exposed to external impacts and becomes less durable, an abnormally large amount of heat may be generated from the battery of the aerosol generating device.

Due to this heat generation phenomenon, internal elements of the aerosol generating device may break down or malfunction, and users of the aerosol generating device may suffer burns to their hands. In addition, there may be a problem in that the temperature of an aerosol generated by the aerosol generating device does not cool to an appropriate temperature for inhalation.

Various embodiments of the present disclosure aim to prevent an aerosol generating device from malfunctioning or being damaged by heat generated from a battery of the aerosol generating device, and to prevent the performance of the aerosol generating device from being deteriorated.

The problems to be solved through the embodiments of the present disclosure are not limited to the problems described above, and problems not mentioned can be clearly understood by a person having ordinary skill in the art to which the embodiments belong from this specification and the attached drawings.

### Solution to Problem

An aerosol generating device according to an embodiment may include a housing including a first accommodation space for accommodating an aerosol generating article, a second accommodation space for accommodating a cartridge in which an aerosol generating material is stored, and a battery accommodation space, a first airflow passage arranged inside the housing and connecting the first accommodation space and the second accommodation space to each other, a first heat dissipation member arranged between the first airflow passage and the battery accommodation space to absorb heat inside the battery accommodation space, and a battery detachably coupled to the battery accommodation space.

### Advantageous Effects of Invention

An aerosol generating device according to various embodiments of the present disclosure may absorb or emit heat generated from a battery of the aerosol generating device, thereby preventing damage and malfunction of the aerosol generating device in advance and preventing deterioration of the performance of the aerosol generating device.

According to an embodiment, an aerosol generating device includes a housing including an insertion hole into which an aerosol generating article is inserted and the heater assembly for heating the aerosol generating article inserted through the insertion hole.

### Brief Description of Drawings

FIG. 1 is a perspective view of an aerosol generating device according to an embodiment.
FIGS. 2A to 2E are various examples for describing a configuration of the aerosol generating device of FIG. 1.
FIG. 3A is a perspective view of a combination of a body, a cartridge and a cap of the aerosol generating device of FIG. 2A and/or FIG. 2C.
FIG. 3B is a cross-sectional view of the aerosol generating device of FIG. 2B and/or 2C.
FIG. 3C is a perspective view of a combination of a body, a cartridge and a cap of the aerosol generating device of FIG. 2E.
FIG. 3D is an exploded perspective view of a cartridge of the aerosol generating device of FIG. 2E.
FIG. 3E is a cross-sectional view of a cartridge of the aerosol generating device of FIG. 2E.
FIG. 3F is a cross-sectional view of the aerosol generating device of FIG. 2E.
FIG. 4 is a cross-sectional view for describing a first heat dissipation member, a first airflow passage and a second airflow passage of an aerosol generating device according to an embodiment.
FIG. 5A is a diagram illustrating an example of the second airflow passage of the aerosol generating device of FIG. 4.
FIG. 5B is a diagram illustrating another example of the second airflow passage of the aerosol generating device of FIG. 4.
FIG. 6 is a diagram for describing a second heat dissipation member of an aerosol generating device according to an embodiment.
FIG. 7 is a diagram for describing a second heat dissipation member of an aerosol generating device according to another embodiment.
FIG. 8 is a diagram for describing a structure of arrangement of a second airflow passage of FIG. 6.
FIG. 9A is a diagram for describing a structure of arrangement of a second airflow passage of FIG. 7 according to an embodiment.
FIG. 9B is a diagram for describing a structure of arrangement of the second airflow passage of FIG. 7 according to another embodiment.
FIG. 10 is a block diagram of an aerosol generating device according to another embodiment.

### Best Mode for Carrying out the Invention

An aerosol generating device according to an embodiment includes a housing including a first accommodation space for accommodating an aerosol generating article, a second accommodation space for accommodating a cartridge in which an aerosol generating material is stored, and a battery accommodation space, a first airflow passage arranged inside the housing and connecting the first accommodation space and the second accommodation space to each other, a first heat dissipation member arranged between the first airflow passage and the battery accommodation space to absorb heat inside the battery accommodation space, and a battery detachably coupled to the battery accommodation space.

The aerosol generating device further includes a second airflow passage connecting the outside of the aerosol generating device and the battery accommodation space to each other.

The housing further includes one or more air holes passing through the housing, and the second airflow passage is arranged such that external air introduced into the battery accommodation space moves to the outside of the aerosol generating device through the air holes.

The second airflow passage is arranged such that external air introduced into the battery accommodation space moves along an edge of the battery accommodation space and then moves to the outside of the aerosol generating device.

The second airflow passage is arranged such that external air introduced into the battery accommodation space moves in a spiral direction along an outer surface of the battery accommodation space and then moves to the outside of the aerosol generating device.

The second airflow passage is formed in a shape which is bent a plurality of times in a direction parallel to a lengthwise direction of the housing, in a vertical direction, or in a diagonal direction.

One area of the airflow passage includes a structure having a mesh shape, and the structure includes at least one of metal, plastic, and polyethylene terephthalate (PET).

The aerosol generating device further includes a battery cover arranged in one area of the housing to open and close the battery accommodation space.

The battery cover includes an external battery cover forming the exterior of the battery cover, an internal battery cover formed in the center of inside the battery cover to press the battery toward the housing when the battery is coupled to the battery accommodation space, and a protrusion arranged along an inside edge of the battery cover.

The housing further includes a groove to which the protrusion is inserted when the battery cover is coupled to the housing.

The housing further includes a second heat dissipation member positioned between the protrusion and the groove when the protrusion is inserted into the groove, and ensuring absorption of heat inside the accommodation space.

One area of the battery cover includes a structure having a mesh shape, and the structure includes at least one of metal, plastic, and polyethylene terephthalate.

### Mode for the Invention

The terms used in the examples are selected from commonly used terms as much as possible while considering the functions in the present examples, but these may vary depending on the intention of engineers working in the field, precedents, the emergence of new technologies, etc. Additionally, in certain cases, there are terms arbitrarily selected by the applicant, and in such cases, their meanings will be described in detail in the description of the relevant invention. Therefore, the terms used in this disclosure should be defined based on the meaning of the terms and the overall content of the present invention, rather than simply the names of the terms.

When a part of the specification is said to "include" a component, this does not mean that it excludes other components, but rather that it may include other components, unless otherwise specifically stated. In addition, terms such as "-part" and "-module" described in the specification mean a unit that processes at least one function or operation, which may be implemented as hardware or software, or as a combination of hardware and software.

Also, in describing the embodiments disclosed in this specification, detailed descriptions of well-known technologies may be omitted if it is determined that they could obscure the essence of the embodiments disclosed herein. Additionally, the accompanying drawings are provided merely to facilitate the understanding of the embodiments disclosed in this specification, and the technical spirit disclosed herein is not limited by the drawings. It should be understood that all modifications, equivalents, and substitutes that fall within the spirit and scope of this disclosure are included.

Terms including ordinal numbers, such as first, second, etc., may be used to describe various components, but the components are not limited by the terms. The above terms are used solely to distinguish one component from another.

When a component is referred to as being "connected" or "coupled" to another component, it should be understood that the component may be directly connected or coupled to the other component, or there may be intervening components in between. On the other hand, when a component is referred to as being "directly connected" or "directly coupled" to another component, it should be understood that there are no intervening components in between.

Singular expressions include plural expressions unless the context clearly indicates otherwise.

Below, with reference to the attached drawings, an embodiment of the present disclosure is described in detail so that a person having ordinary knowledge in the technical field to which the present disclosure belongs can easily implement the present disclosure. However, the present disclosure can be implemented in various different forms and is not limited to the embodiments described herein.

Hereinafter, embodiments disclosed in this specification will be described in detail with reference to the accompanying drawings, and identical or similar components will be assigned the same reference numbers, regardless of the drawing symbols, and redundant explanations will be omitted.

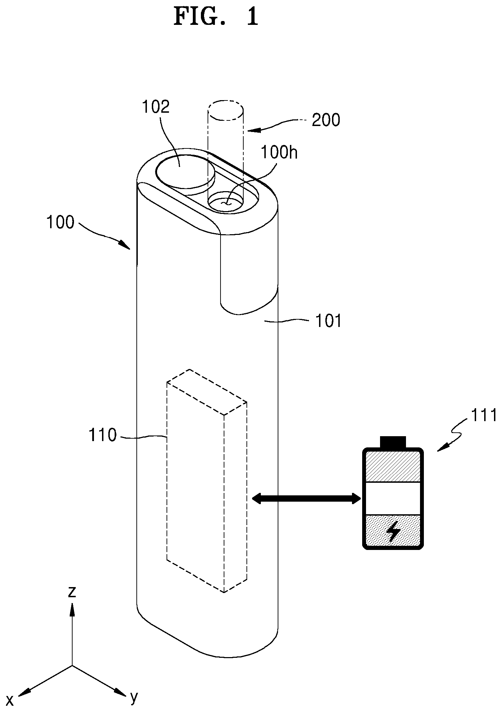

FIG. 1 is a perspective view of an aerosol generating device according to an embodiment.

An aerosol generating device 100 may generate and provide an aerosol.

Referring to FIG. 1, the aerosol generating device 100 according to an embodiment may include a housing 101. The housing 101 may form the general exterior of the aerosol generating device 100, and a space may be provided in the housing 101. Various components for generating and providing an aerosol may be arranged in the internal space (or 'installation space') of the housing 101.

The housing 101 may include a first receiving space 210 into which an aerosol generating article 200 is inserted, a cover 102 for opening or closing the first accommodation space 210, and battery accommodation space 110 in which a battery (111) is received.

The first accommodation space 210 may provide a space into which the aerosol generating article may be removably inserted (or "coupled"). The aerosol generating article 200 may include an aerosol generating material heated by a heater to generate an aerosol. The first accommodation space 210 may provide an open space toward the outside of the housing 101, so that the aerosol generating article 200 may be inserted into the open space.

The first accommodation space 210 may be recessed toward the inside of the housing 101, so that at least a portion of the aerosol generating article 200 may be inserted into the accommodation space 100h. The depth by which the first accommodation space 210 is recessed may correspond to the length of a portion of the aerosol generating article 200, the portion including an aerosol generating material and/or substrate. A portion of the aerosol generating article 200 may be inserted into the housing 101, and the other portion of the aerosol generating article 200 may protrude toward the outside of the housing 101. A user may have, in his/her mouth, a portion of the aerosol generating article 200, the portion being exposed toward the outside of the housing 101, and may suck in air including an aerosol.

The cover 102 may open or close the first accommodation space 210. The cover 102 may be movably arranged in the housing 101 and may expose the accommodation space 100h to the outside of the aerosol generating device 100 or may cover the accommodation space 100h not to expose the accommodation space 100h to the outside of the aerosol generating device 100. The cover 102 may open the accommodation space 100h, while the cover 102 is being located in a first area of the housing 101, and the aerosol generating article 200 may be inserted into the open accommodation space 100h. The cover 102 may move from the first area to a second area of the housing 101 to close the accommodation space 100h. The cover 102 may be located in the second area of the housing 101 and may prevent the accommodation space 100h from being exposed to the outside, and thus, the accommodation space 100h may be protected from external shocks or external impurities.

The battery accommodation space 110 may accommodate the battery 111 configured to supply power to a heater configured to heat the aerosol generating article 200. The battery accommodation space 110 may be formed at a side (e.g., the side toward a +x axis) of the housing 101 and may accommodate the battery 111. The location in which the battery accommodation space 110 is formed is not limited thereto, and the battery accommodation space 110 may be formed in an inner area of the housing 101.

The battery 111 may be detachably coupled to the battery accommodation space 110 and may supply power for operations of components of the aerosol generating device 100. The battery 111 accommodated in the battery accommodation space 110 may be coupled to the battery accommodation space 110 and may be electrically connected to the components (e.g., the heater or a processor) of the aerosol generating device 100.

For example, the battery accommodation space 110 may include a terminal to be electrically connected to the battery 111, and the battery 111 may include a terminal to supply power to the aerosol generating device 100 through the terminal provided in the battery accommodation space 110. The battery 111 may supply power for the components of the aerosol generating device 100 to operate, through the terminal provided in the battery 111 and the terminal provided in the battery accommodation space 110.

The battery 111 may be charged in a state in which the battery 111 is attached to the battery accommodation space 110 and/or a state in which the battery 111 is detached from the battery accommodation space 110. While the battery 111 is being accommodated in the battery accommodation space 110, the aerosol generating device 100 may be electrically connected to an external charger, and power supplied from the external charger may be supplied to the battery 111 through the terminal provided in the battery accommodation space 110 and the terminal provided in the battery 111, so that the battery 111 may be charged. The method of charging the battery 111 is not limited thereto. The battery 111 may be detached from the battery accommodation space 110 and may be connected to the external charger or accommodated in the external charger separately from the aerosol generating device 100. The battery 111 may be charged by receiving power from the external charger through the terminal provided in the battery 111.

When the battery 111 is charged or used, heat may be generated from the battery 111. The heat generated from the battery 111 may affect performance of other elements (e.g., a heater, a processor, or the like) of the aerosol generating device 100 arranged around the battery 111. In particular, when the battery 111 is overcharged or over-discharged, excessive heat may be generated from the battery 111, and this may cause malfunction and/or damage of the other elements of the aerosol generating device 100 arranged around the battery 111.

The chemical and/or physical properties of the battery 111 may deteriorate over use. For example, the more the battery 111 is used, the internal resistance of the battery 111 may increase, so that the available capacitance of the battery 111 may be reduced. The battery 111 that is expired may need to be replaced by the battery 111 that is new, according to a certain cycle. The expired battery 111 may be manually and/or automatically detached from the aerosol generating device 100, and the new battery 111 may be newly attached to the aerosol generating device 100.

Excessive heat may be generated from the battery 111 which has reached the end of its life or the battery 111 which has been subjected to external impact. When the battery 111 ages or has been subjected to external impact, the durability of the battery 111 may be weakened. The battery 111 with weakened durability may operate abnormally, and an abnormally large amount of heat may be generated from the battery 111. The excessive heat generated from the battery 111 which ages or has been subject to external impact may cause malfunction and/or damage to the other elements of the aerosol generating device 100 arranged around the battery 111.

Although not shown, the aerosol generating device 100 may further include a battery cover detachably coupled to the housing 101 to protect the battery 111. While the battery cover is being detached from the housing 101, at least portions of the battery accommodation space 110 and the battery may be exposed to the outside of the aerosol generating device 100. Through the open battery accommodation space 110, the expired battery 111 may be replaced by the new battery 111. The battery cover may be attached to the housing 101 to close the battery accommodation space 110. The battery 111 accommodated in the closed battery accommodation space 110 may be protected from external impurities and may be fixed in the battery accommodation space 110 through the battery cover. The aerosol generating device 100 may further include a fixing member arranged in the battery accommodation space 110 and/or the battery cover and configured to fix the battery 111 in the battery accommodation space 110. In the aerosol generating device 100, the battery 111 may be fixed in the battery accommodation space 110 by using the fixing member. Thus, the battery 111 may be prevented from being easily separated from the aerosol generating device 100 by external physical shocks.

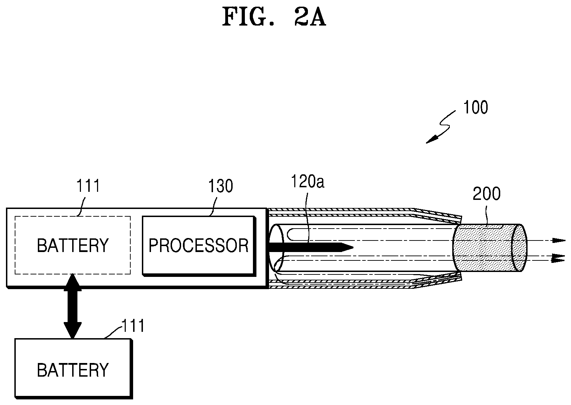

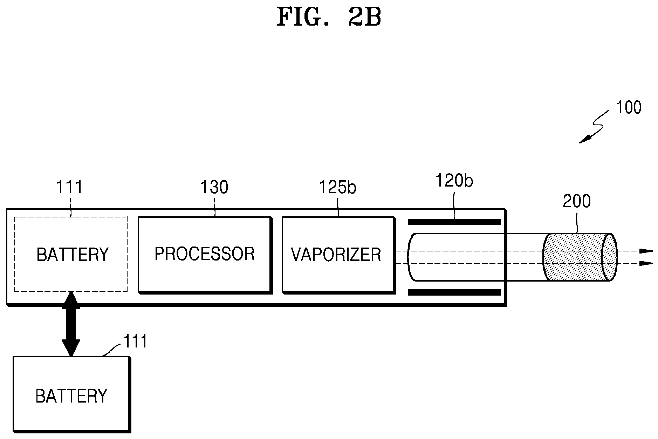

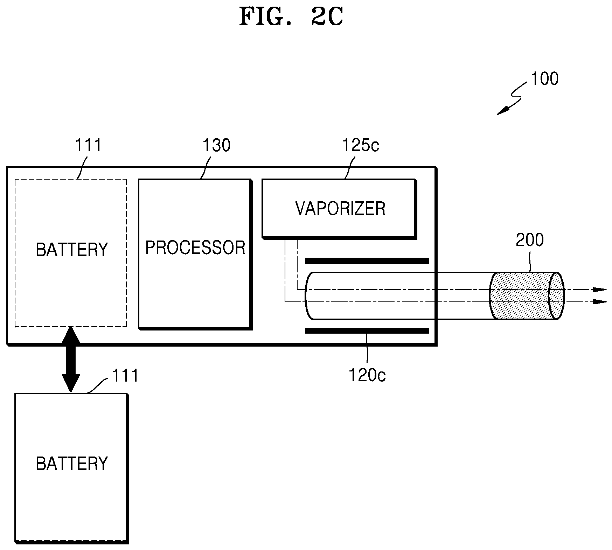

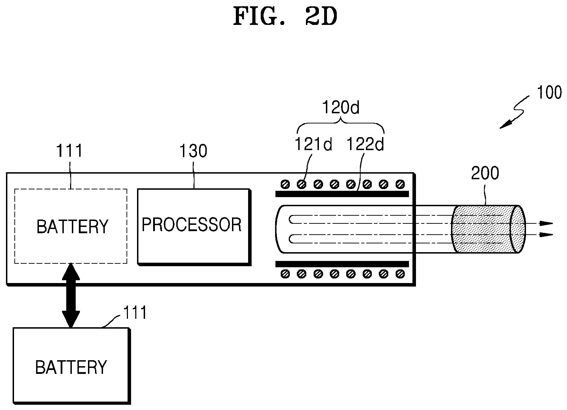

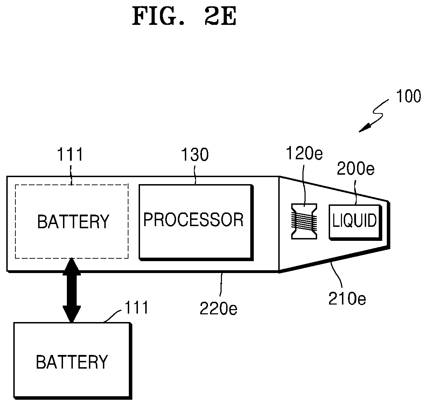

FIGS. 2A to 2E are various examples for describing components of the aerosol generating device of FIG. 1. Referring to FIGS. 2A to 2E, the aerosol generating device 100 may include the battery 111, a processor 130, and heaters 120a to 120e. The components of the aerosol generating device 100 may be the same or substantially the same as at least one of the components of the aerosol generating device 100 of FIGS. 1 and 2. Hereinafter, the same descriptions are omitted.

The aerosol generating device 100 may be realized in various ways. For example, the aerosol generating device 100 may use an electrical resistance heating method or an induction heating method. As another example, the aerosol generating device 100 may be realized to further include a vaporizer or a cartridge. In the aerosol generating device 100 of FIGS. 2A to 2E, the components related to embodiments of the present disclosure are illustrated, and it may be obviously understood by one of ordinary skill in the art that components other than the components illustrated in FIGS. 2A to 2E may further be included in the aerosol generating device 100.

FIG. 2A is a view for describing the aerosol generating device 100 using an electrical resistance method, according to an embodiment. Referring to FIG. 2A, the aerosol generating device 100 may include the battery 111, the heater 120a, and the processor 130.

The aerosol generating article 200 may be inserted into an accommodation space (e.g., the accommodation space 100h of FIG. 1) in the aerosol generating device 100. When the aerosol generating article 20 is inserted into the aerosol generating device 100, the aerosol generating device 100 may heat the aerosol generating article 200 by using the heater 120a to generate an aerosol from the aerosol generating article 200. The generated aerosol may be delivered to a user by passing through the aerosol generating article 200, and thus, the user may smoke the aerosol generating article 20.

The heater 120a may be heated by power supplied from the battery 111. The heater 120a may include an electrical resistance heater. For example, the heater 120a may include an electrically conductive track, and when currents flow through the electrically conductive track, the heater 120a may be heated.

The electrically conductive track of the heater 120a may be formed of an electrically resistive material, and thus, a heating temperature may be determined according to consumed power of the resistance, and a resistance value of the electrically conductive track may be set based on consumed power of the resistance of the electrically conductive track. The resistance value of the electrically conductive track may be variously set according to the material, length, width, thickness, pattern, or the like of the electrically resistive material.

The internal resistance of the electrically conductive track may increase as the temperature increases, based on the resistive temperature coefficient characteristic. For example, in a certain temperature section, the temperature of the electrically conductive track may be proportional to the resistance of the electrically conductive track. By using this principle, the heater 120a manufactured by including the electrically conductive track may heat the aerosol generating article 200 through the electrically resistive method.

The electrically conductive track may be formed of tungsten, gold, platinum, silver, copper, nickel, palladium, or a combination thereof. Also, the electrically conductive track may be doped with an appropriate doping material and may include an alloy.

The heater 120a may be manufactured to have various shapes including a tube shape, a plate shape, a needle shape, a rod shape, etc. Also, the heater 120a may be arranged in a plural number. The heater 120a may be inserted into the aerosol generating article 200 and may be used for an inner heating method to heat the inside of the aerosol generating article 200.

The battery 111 may be separated from or mounted on the aerosol generating device 100, and when the battery 111 is attached to the aerosol generating device 100, power may be supplied from the battery 111 to the heater 120a for a heating operation of the heater 120a to control the temperature of the electrically conductive track.

The processor 130 may control the power supplied to the heater 120a to control the heating operation of the heater 120a. For example, the processor 130 may control, according to a temperature profile, the temperature by which the aerosol generating article 20 is heated by the heater 120a.

FIGS. 2B and 2C are views for describing the aerosol generating device 100 additionally including vaporizers 125b and 125c, according to an embodiment. Referring to FIGS. 2B and 2C, the aerosol generating device 100 may correspond to the aerosol generating device 100 of FIG. 2A further including the vaporizers 125b and 125c.

FIG. 2B illustrates that the vaporizer 125b and the heater 120b are arranged in series, while FIG. 2C illustrates that the vaporizer 125c and the heater 120c are arranged in parallel. That is, according to the arrangement of the vaporizers 125b and 125c, the aerosol generating device 100 may vary.

The heaters 120b and 120c may be heated by power supplied from the battery 111. The heaters 120b and 120c may include electrically resistive heaters and may include, for example, an electrically conductive track.

Unlike the heater 120a of FIG. 2A, the heaters 120b and 120c of FIGS. 2B and 2C may be realized as an external heating method, whereby the heaters 120b and 120c are arranged at the outer circumference of the aerosol generating article 200 and heat an outer surface of the aerosol generating article 200.

The vaporizers 125b and 125c may generate an aerosol by heating a liquid composition, and the generated aerosol may be delivered to a user by passing through the aerosol generating article 200. That is, the aerosol generated by the vaporizers 125b and 125c may be transported along an air flow path of the aerosol generating device 100, and through the air flow path, the aerosol generated by the vaporizers 125b and 125c may pass through the aerosol generating article 200 to be delivered to the user.

The vaporizers 125b and 125c may include a liquid storage, a liquid delivery element, and a heating element (or a vaporizing element). However, each of the liquid storage, the liquid delivery element, and the heating element may be a separate module and may be arranged in other locations of the aerosol generating device 100, rather than being located in the vaporizers 125b and 125c.

The liquid storage may store a liquid composition. For example, the liquid composition may include a liquid including a tobacco-containing material including a volatile tobacco-flavor ingredient or a liquid including a non-tobacco material. The liquid storage may be manufactured to be attached to/detached from the vaporizers 125b and 125c or may be integrally manufactured with the vaporizers 125b and 125c. For example, the liquid composition may include water, a solvent, ethanol, a plant extract, a spice, a flavor, or a vitamin mixture. In addition, the liquid composition may include an aerosol forming agent such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element included in the vaporizers 125b and 125c may be an element to heat (vaporize) the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, an aerosol may be generated. Thus, the vaporizers 125b and 125c may also be referred to by other terms such as "cartomizer" or "atomizer."

The battery 111 may be separated from or mounted on the aerosol generating device 100, and when the battery 111 is mounted on the aerosol generating device 100, power may be supplied from the battery 111 to the heaters 120b and 120c and the vaporizers 125b and 125c for heating operations of the heaters 120b and 120c and the vaporizers 125b and 125c.

The processor 130 may control the power supplied to the heaters 120b and 120c and the vaporizers 125b and 125c to control the heating operations of the heaters 120b and 120c and the vaporizers 125b and 125c. For example, the processor 130 may control, according to a temperature profile, the temperature by which the aerosol generating article 200 is heated by the heaters 120b and 120c and the vaporizers 125b and 125c.

FIG. 2D is a view for describing the aerosol generating device 100 using an induction heating method according to an embodiment. Referring to FIG. 2D, the aerosol generating device 100 may include a heater 120d including a coil 121d and a susceptor 122d, the battery 111, and the processor 130.

The aerosol generating device 100 may generate an aerosol by heating the aerosol generating article 200 accommodated in the aerosol generating device 100 by using an induction heating method. The induction heating method may denote a method of making a magnetic material emit heat, by applying an alternating magnetic field, the direction of which cyclically changes, to the magnetic material emitting heat via an external magnetic field. Thus, the aerosol generating device 100 may make the magnetic material emit heat energy, by applying the alternating magnetic field to the magnetic material, and may deliver the heat energy emitted from the magnetic material to the aerosol generating article 200 to heat the aerosol generating article 200. Here, the magnetic material emitting heat through the external magnetic field may be the susceptor 122d. The susceptor 122d be provided in the aerosol generating device 100. Alternatively, the susceptor 122d may be provided in the aerosol generating article 200 as the shape of a piece, a flake, a strip, or the like, rather than being not included in the aerosol generating device 100.

The susceptor 122d may include a ferromagnetic substance. For example, the material of the susceptor 122d may include metal or carbon. The material of the susceptor 122d may include at least one of ferrite, a ferromagnetic alloy, stainless steel, and aluminum (Al). Also, the material of the susceptor 122d may include at least one of ceramic, such as graphite, zirconia, or the like, a transition metal, such as nickel (Ni), cobalt (Co), or the like, and a metalloid, such as boron (B), phosphorus (P), or the like.

The aerosol generating device 100 may accommodate the aerosol generating article 200. A space to accommodate the aerosol generating article 200 may be formed in the aerosol generating device 200d. The susceptor 122d may be arranged on the circumference of the space accommodating the aerosol generating article 200. For example, the susceptor 122d may have a cylindrical shape surrounding the outside of the aerosol generating article 200. Thus, when the aerosol generating article 200 is accommodated in the aerosol generating device 200d, the aerosol generating article 200 may be accommodated in the accommodation space of the susceptor 122d, and the susceptor 122d may be arranged at a location surrounding at least a portion of an outer surface of the aerosol generating article 200. However, the shape of the susceptor 122d is not limited thereto and may vary.

The heater 120d may use an induction heating method, and the heater 120d may heat the aerosol generating article 200 accommodated in the aerosol generating device 100, by using the susceptor 122d emitting heat through an external magnetic field generated by the coil 121d.

The coil 121d may be arranged to be wound along an outer surface of the susceptor 122d and may apply an alternating magnetic field to the susceptor 122d. When power is supplied to the coil 121d from the aerosol generating device 100, a magnetic field may be formed in an inner area of the coil 121d. When an alternating current is applied to the coil 121d, the direction of the magnetic field formed in the inner area of the coil 121d may constantly change. When the susceptor 122d is located in the inner area of the coil 121d and exposed to the alternating magnetic field, the direction of which cyclically changes, the susceptor 122d may emit heat and a cigarette accommodated in the susceptor 122d may be heated. The shape of the coil 121d may include a cylindrical shape wrapped in a lengthwise direction of the aerosol generating article 200, but is not limited thereto. The coil 121d may be realized as various types, such as a planar coil, etc.

The battery 111 may be detached from or mounted on the aerosol generating device 100, and when the battery 111 is mounted on the aerosol generating device 100, the battery 111 may supply power, for example, to the coil 121d for the heating operation of the heater 120d.

The processor 130 may control the power supplied to the coil 121d to control the heating operation of the heater 120d. For example, the processor 130 may adjust the intensity of the magnetic field induced by the coil 121d according to the temperature profile, and thus, may control the temperature by which the aerosol generating article 200 is heated according to the induction heating of the susceptor 122d.

FIG. 2E is a view for describing the aerosol generating device 100 including a cartridge 210e replaceable and containing an aerosol generating material 210, according to an embodiment.

The aerosol generating device 100 of FIG. 2E may include the cartridge 210e containing the aerosol generating material 210 and a body 220e for supporting the cartridge 210e. The positions of the hardware components included in the aerosol generating device 100 of FIG. 1 may be divided into the body 220e and the cartridge 210e.

The cartridge 210e may be coupled to the body 220e, while the aerosol generating material 210 is being accommodated in the cartridge 210e. With a portion of the cartridge 210e inserted into a receptacle of the body 220e, the cartridge 210e may be mounted on the body 220e.

The cartridge 210e may contain the aerosol generating material 210 including a liquid composition, but is not limited thereto and may contain the aerosol generating material 210 in the state of any one of a solid, a gas, or a gel. For example, the liquid composition may include a liquid including a tobacco-containing material including a volatile tobacco-flavor component or a liquid including a non-tobacco material.

The heater 120e included in the cartridge 210e may perform a heating operation via an electric signal or a wireless signal transmitted from the body 220e. Thus, the aerosol generating material 210 in the cartridge 210e may be vaporized by the heating of the heater 120e, and thus, an aerosol may be generated.

The heater 120e may be realized as a conductive filament including a metal material, such as copper, nickel, tungsten, or the like, or a ceramic heating material, in order to heat, by generating heat via electrical resistance, the aerosol generating material delivered to the liquid delivery element, and may be wound along the liquid delivery element or arranged to be adjacent to the liquid delivery element.

The battery 111 may be detached from or mounted on the aerosol generating device 100, and when the battery 111 is mounted on the aerosol generating device 100, power may be supplied from the battery 111 to the heater 120a for a heating operation of the heater 120e.

The processor 130 may control the power supplied to the heater 120e to control the heating operation of the heater 120e. For example, the processor 130 may control, according to a temperature profile, the temperature by which the aerosol generating material 210 is heated by the heater 120a.

The aerosol generating device 100 may be realized as at least one of the aerosol generating devices 100 of FIGS. 2A to 2E, but is not necessarily limited thereto and may be realized as other ways.

The aerosol generating devices 100 of FIGS. 2A to 2E may commonly use the battery 111 detachably coupled to the aerosol generating device 100 as a power supply source. The battery 111 may be detached from the aerosol generating device 100 for charging or replacement, and the charged battery or a new battery may be newly attached to the aerosol generating device 100.

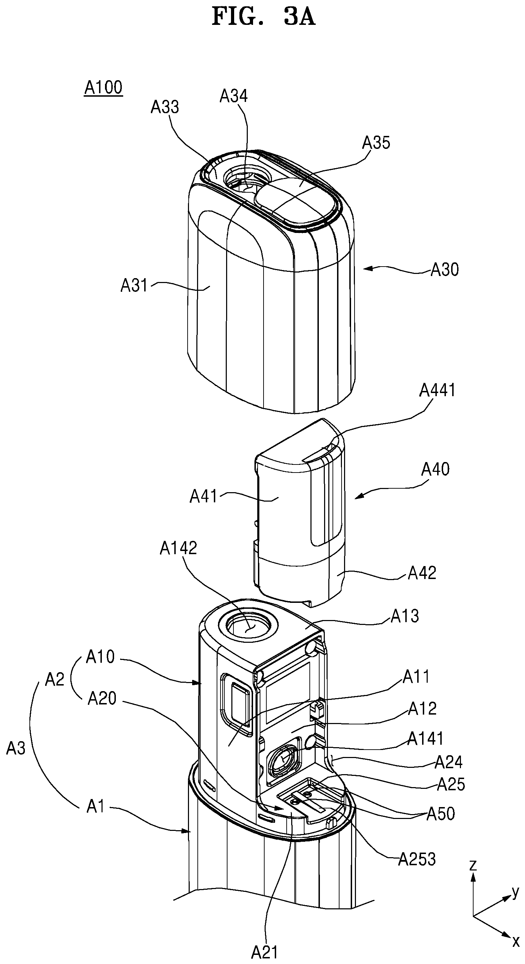

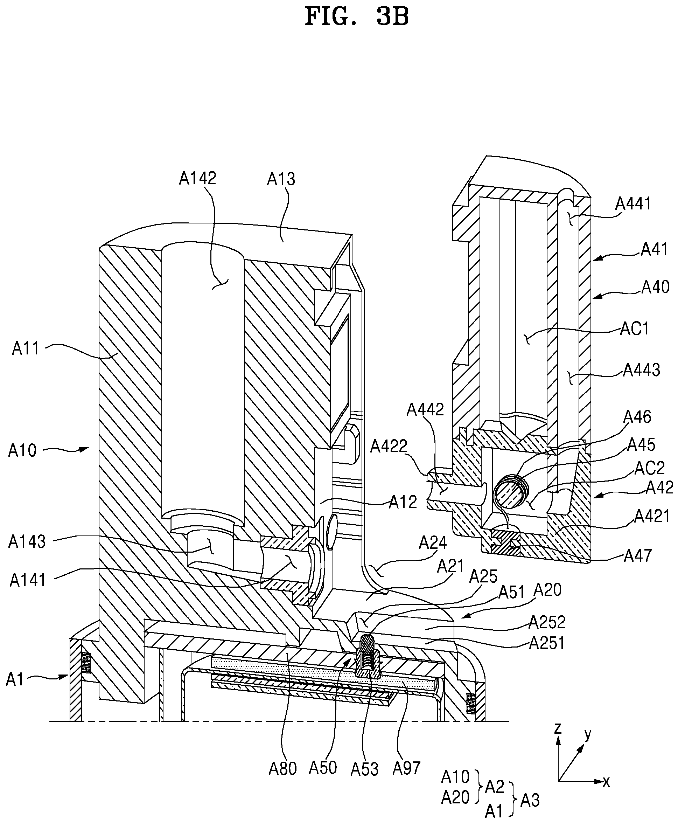

FIG. 3A is a perspective view of a combination of a body, a cartridge, and a cap of the aerosol generating device of FIG. 2B and/or FIG. 2C, and FIG. 3B is a cross-sectional view of the aerosol generating device of FIG. 2B and/or FIG. 2C.

Referring to FIG. 3A, an aerosol generating device A100 of FIG. 2B and/or FIG. 2C may include a body A3. The aerosol generating device A100 may include a cap A30. The aerosol generating device A100 may include a cartridge A40. The cartridge A40 may be removably coupled on one side of the body A3. The cap A30 may be removably coupled to the body A3 to cover the cartridge A40. A stick S may be inserted into the body A3 through the cap A30.

The body A3 may include a lower body A1 and an upper body A2. Components of the aerosol generating device A100, such as a battery and a controller, may be installed inside the lower body A1. The upper body A2 may be coupled to an upper side of the lower body A1.

The upper body A2 may include a column A10 and a seating portion A20. The column A10 may extend long in a vertical direction. The column A10 may include an outer wall A11, an inner wall A12, and an upper wall A13.

The seating portion A20 may protrude from a lower portion of the inner wall A12 of the column A10. The seating portion A20 may face an upper side. A cartridge area A24 may be formed between the inner wall A12 of the column A10 and the seating portion A20. The cartridge area A24 may be located on one side of the inner wall A12 of the column A10 and may be located above the seating portion A20.

The column A10 may include an insertion space A142. The insertion space A142 may extend in the vertical direction inside the column A10 and may be opened upwards so that the upper wall A13 is opened.

A body inlet A141 may be formed in one side of the column A10. The body inlet A141 may be formed by opening the inner wall A12. The body inlet A141 may be opened to the outside of the column A10. The body inlet A141 may communicate with the insertion space A142. The body inlet A141 may be arranged to face the cartridge area A24. The body inlet A141 may communicate with the cartridge area A24.

The cartridge A40 may be detachably coupled to the upper body A2 in the cartridge area A24. The cartridge A40 may be coupled to the inner wall A12 of the column A10 and may be seated on the seating portion A20 so that a bottom thereof is supported. The cartridge A40 may include a first container A41 and a second container A42. The first container A41 may be arranged on an upper side of the second container A42. The first container A41 may store a liquid.

The cap A30 may cover the upper body A2 and may be detachably coupled to the body A3. The cap A30 may cover the upper body A2 and the cartridge A40 coupled to the upper body A2. The cap A30 may have formed therein a space into which the upper body A2 and the cartridge A40 are inserted. The space inside the cap A30 may be opened downwards. A sidewall A31 of the cap A30 may surround a side portion of the space inside the cap A30. An upper wall A33 of the cap A30 may cover an upper portion of the space inside the cap A30. An insertion hole A34 may be formed by opening the upper wall A33. When the cap A30 is coupled to the body A3, the insertion hole A34 may communicate with the insertion space A142 above the insertion space A142. A cover A35 may be movably installed on the upper wall A33. The cover A35 may slide on the upper wall A33. The cover A35 may open and close the insertion hole A34.

Referring to FIG. 3B, a first chamber AC1 may be formed inside the first container A41. Liquid may be stored in the first chamber AC1. A second chamber AC2 may be formed inside the second container A42.

A cartridge inlet A441 may be formed by opening the cartridge A40. A cartridge outlet A442 may be formed by opening the cartridge A40. A cartridge flow path A443 may connect the cartridge inlet A441 to the second chamber AC2. The cartridge outlet A442 may communicate with the second chamber AC2.

The cartridge outlet A442 may be formed by opening one side of the second container A42. A discharge port A422 may surround the cartridge discharge outlet A442. The discharge port A422 may protrude from one side of the second container A42. When the cartridge A40 is coupled to the upper body A2, the discharge port A422 may be inserted into the body inlet A141, and the cartridge outlet A442 and the body inlet A141 may communicate with each other.

A wick A45 may be installed in the second chamber AC2. The wick A45 may be connected to the first chamber AC1. The wick A45 may be supplied with a liquid from the first chamber AC1. A heater A46 may generate heat and heat the wick A45. The heater A46 may be arranged in the second chamber AC2. The heater A46 may be wound around the wick A45. When the heater A46 heats the wick A45, an aerosol may be generated around the wick A45 in the second chamber AC2.

A heater terminal A47 may be exposed to a lower portion of the cartridge A40. The heater terminal A47 may be formed at a bottom of the second container A42. The heater terminal A47 may be electrically connected to the heater A46. When the cartridge A40 is coupled to the upper body A2, the heater terminal A47 may be in contact with and electrically connected to a first pin A50. Here, the heater terminal A47 may be referred to as a second pin A47. In this case, the heater terminal A47 may be referred to as a second pin A47.

The first pin A50 may protrude to the outside of the seating portion A20. The first pin A50 may be supplied with power from a battery installed inside the lower body A1 through a connector A97 and provide the power to the heater terminal A47 and the heater A46. The heater A46 may be supplied with power and generate heat.

Air outside the cartridge A40 may be introduced into the cartridge A40 through the cartridge inlet A441. The air may sequentially flow through the cartridge inlet A441, the cartridge flow path A443, the second chamber AC2, and the cartridge outlet A442. Air inside the cartridge A40 may be discharged to the outside of the cartridge A40 through the cartridge outlet A442. The air introduced into the cartridge A40 may be accompanied by an aerosol generated in the second chamber AC2 and discharged to the outside of the cartridge A40 through the cartridge outlet A442.

The first pin A50 may be arranged inside the body A3 and may protrude to the outside of the body A3. The body A3 may include the seating portion A20.

The seating portion A20 may have an outer recessed groove A25. The outer recessed groove A25 may be formed by recessing an upper surface A21 of the seating portion A20 downwards. The outer recessed groove A25 may be located below the cartridge area A24. The upper surface A21 of the seating portion A20 may be referred to as an outer surface of the body A3. The outer recessed groove A25 may be formed in the outer surface of the body A3.

A lower portion of the outer recessed groove A25 may be covered with a bottom portion A251, and a side portion of the outer recessed groove A25 may be covered with a circumferential portion A252. An upper side of the outer recessed groove A25 may be opened. One side portion of the outer recessed groove A25 may be opened without being covered with the circumferential portion A252. When an x direction indicated in a coordinate system is defined as the front, the front of the outer recessed groove A25 may be opened. An upper end of the first pin A50 may convexly protrude or be exposed upwards from the bottom portion A251 of the outer recessed groove A25 toward the outer recessed groove A25.

The bottom of the cartridge A40 may have a shape corresponding to the seating portion A20 and the outer recessed groove A25. When the cartridge A40 is coupled to the upper body A2, the bottom of the cartridge A40 may be seated on the seating port A20, and the first pin A50 and the second pin A47 may be electrically connected to each other.

A plurality of guide portions A253 may be provided. The guide portion A253 may extend long from the front to the rear. The guide portion A253 may be formed to be inclined and gradually become higher from the front to the rear. Each of the plurality of guide portions A253 may be arranged in front of each of a plurality of first pins A50. A height of a rear end of the guide portion A253 adjacent to the first pin A50 may be the same as or similar to a height of the first pin A50.

Accordingly, when the cartridge A40 is coupled to the upper body A2, the guide portion A253 may guide the arrangement of the cartridge A40 so that the first pin A50 and the second pin A47 contact each other.

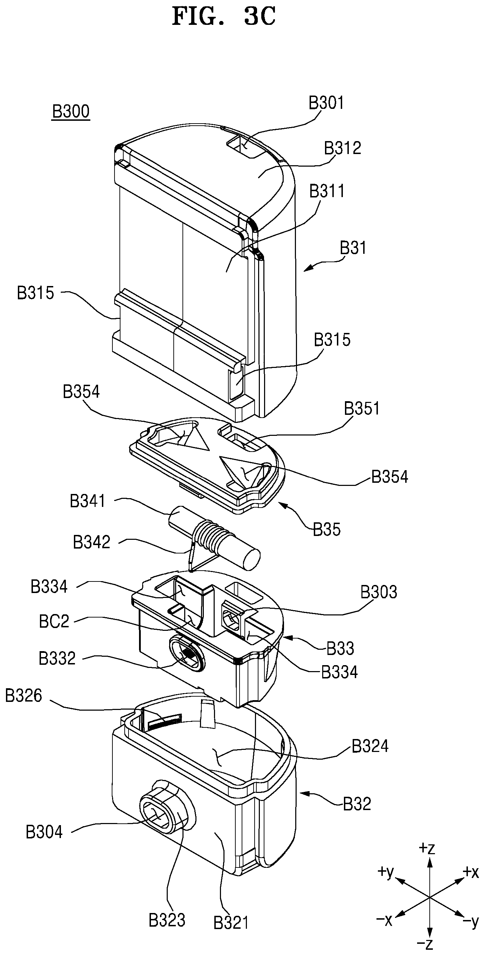

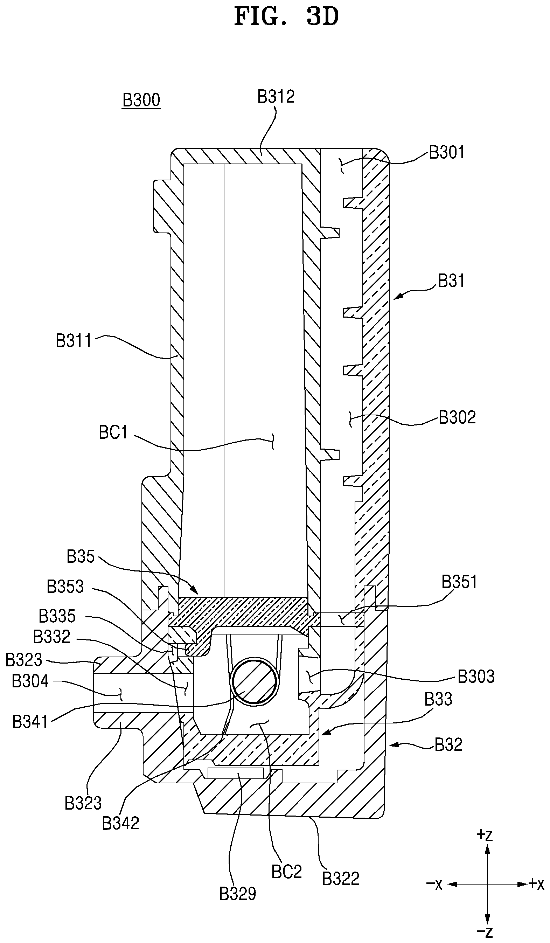

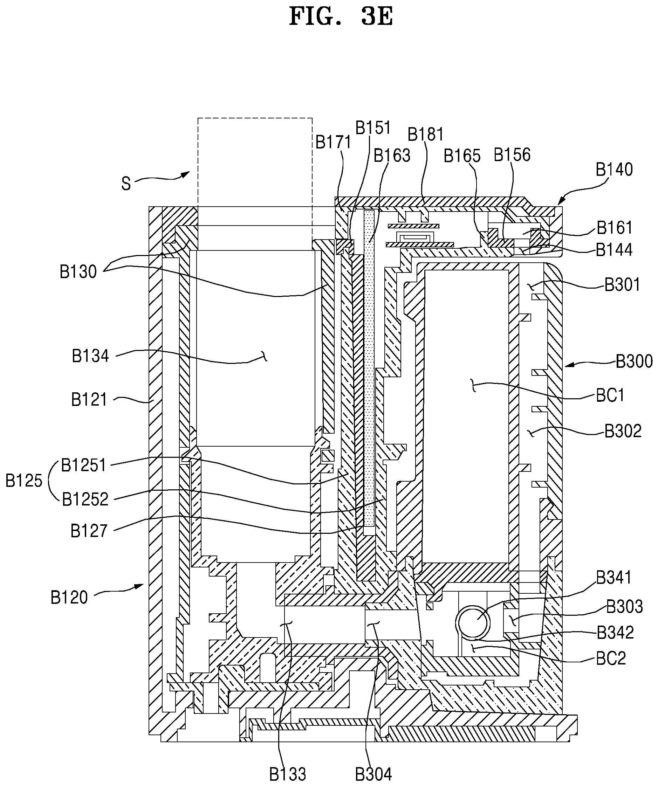

FIG. 3C is a perspective view of a combination of a body, a cartridge, and a cap of the aerosol generating device of FIG. 2E, FIG. 3D is an exploded perspective view of the cartridge of the aerosol generating device of FIG. 2E, FIG. 3E is a cross-sectional view of the cartridge of the aerosol generating device of FIG. 2E, and FIG. 3F is a cross-sectional view of the aerosol generating device of FIG. 2E.

Referring to FIG. 3C, a body B100 of the aerosol generating device A100 of FIG. 2E may include an upper body B120 and a lower body B110. The upper body B120 may be positioned over the lower body B110. The lower body B110 may be elongated vertically. The body B100 may have elements for driving the aerosol generating device accommodated therein. The upper body B120 may provide an insertion space B134 which is opened upward. The insertion space B134 may be positioned in the upper body B120. The insertion space B134 may be elongated vertically. The insertion space B134 may be formed in a pipe B130 positioned inside the upper body B120.

An upper case B200 may have a hollow shape with an open lower portion. The upper body B120 may be inserted into a hollow of the upper case B200. The upper case B200 may be detachably coupled to the body B100. The upper case B200 may cover the upper body B120 to surround the upper body B120. A lateral portion B211 of the upper case B200 may surround and cover an outer wall B121 of the upper body B120. An upper portion B212 of the upper case B200 may cover an upper portion B180 or an outer cover B180 of the upper body B120. When the upper case B200 is coupled to the body B100, the upper case B200 may cover the body B100 and a cartridge B300 together. The cartridge B300 may be arranged inside the upper case B200.

An insertion hole B214 may be formed by opening the upper portion B212 of the upper case B200. The insertion hole B214 may correspond to an opening of the insertion space B134. A cap B215 may be movably installed on the upper portion B212 of the upper case B200. A slide hole B213 may be formed by extending from the insertion hole B214 to one side, in the upper portion B212 of the upper case B200. The cap B215 may move along the slide hole B213. The cap B215 may open and close the insertion hole B214 and the insertion space B134. A stick S may be inserted into the insertion space B134 through the insertion hole B214. For example, the stick S may be a cigarette.

The outer wall B121 and a partition wall B125 may form a lateral portion of the upper body B120. The outer wall B121 and the partition wall B125 may be connected to each other. The outer wall B121 may be covered by an inner surface of the upper case B200. The partition wall B125 may separate a cartridge coupling space B124a from the insertion space B134.

The upper body B120 may include a seating portion B122. The seating portion B122 may extend from a lower portion of the partition wall B125 to one side. The seating portion B122 may be formed on an upper side of the lower body B110. The seating portion B122 may cover a lower portion of the cartridge coupling space B124a. A bottom surface of the cartridge B300 may be seated on and supported by the seating portion B122.

The upper body B120 may include an extension portion B140. The extension portion B140 may extend from an upper portion of the partition wall B125 to one side. The extension portion B140 may extend in a direction in which the seating portion B122 is formed. The extension portion B140 may cover an upper portion of the cartridge coupling space B124a. The extension portion B140 may cover an upper end surface of the cartridge B300. The extension portion B140 may cover a cartridge inlet B301 formed in the cartridge B300. A gap through which air may flow may be formed between the extension portion B140 and the cartridge inlet B301.

The cartridge coupling space B124a may be formed on one side of the upper body B120. The cartridge coupling space B124a may be defined by the seating portion B122 and the partition wall B125 of the upper body B120 and the extension portion B140. A bottom of the cartridge coupling space B124a may be covered by the seating portion B122. One side of the cartridge coupling space B124a may be covered by the partition wall B125 of the upper body B120. An upper side of the cartridge coupling space B 124a may be covered by the extension portion B 140. The cartridge coupling space B124a may be opened to the outside between the seating portion B122 and the extension portion B140.

The cartridge B300 may be inserted into the cartridge coupling space B124a to be coupled to the body B100. The cartridge B300 may be detachably coupled to the body B100. A lateral surface B311 of the cartridge B300 may face the partition wall B125. An upper end surface B312 of the cartridge B300 may be covered by the extension portion B140. A bottom surface B322 of the cartridge B300 may be seated on the seating portion B122. A cartridge terminal B128 may be connected to the cartridge B300 to supply power to a heater B342 inside the cartridge B300.

A coupling hook B125a may be formed at the upper body B120. A pusher B125b may be formed on the upper body B120. The coupling hook B125a and the pusher B125b may be formed in a pair on both sides of the upper body B120 and arranged at locations facing each other. The cartridge B300 may include a hook coupling groove B315. The hook coupling groove B315 may be formed at a location corresponding to the coupling hook B125a. When the cartridge B300 is inserted into the cartridge coupling space B124a, the coupling hook B125a may be coupled to the hook coupling groove B315 to couple the cartridge B300 to the body B100. The pusher B125b and the coupling hook B125a may move in conjunction with each other. When the pusher B125b is pressed, the coupling hook B125a may be moved in a direction detached from the hook coupling groove B315, and the cartridge B300 may be detached from the body B100.

A connection flow path B133 may be formed in a lower portion of the partition wall B125. The connection flow path B133 may communicate with the insertion space B134. The connection flow path B133 may be opened to one side of the upper body B120. When the cartridge B300 is coupled to the body B100, a discharge port B323 may be inserted into the connection flow path B133, and the connection flow path B133 and a cartridge discharge port B304 may communicate with each other.

Referring to FIG. 3D, the cartridge B300 may include a first container B31 and a second container B32. The first container B31 may be coupled to an upper side of the second container B32. A plate B35 may be coupled between the first container B31 and the second container B32 or between the first container B31 and a frame B33.

The first container B31 may include a first chamber BC1 that may store a liquid therein. The first container B31 may surround the first chamber BC1, and a lower portion of the first chamber BC1 may be opened. An opening of the first chamber BC1 may be covered by the plate B35.

Referring to FIG. 3E, the first container B31 may have an inlet passage B302 through which air passes. The first chamber C1 and the inlet passage B302 may be separated from each other. The inlet passage B302 may be vertically elongated on one side of the first container B31.

The first container B31 may include a cartridge inlet B301. The cartridge inlet B301 may be formed by opening an upper portion of the first container B31 and may communicate with the inflow passage B302. The cartridge inlet B301 may communicate with an upper end of the inflow passage B302. A lower end of the inflow passage B302 may communicate with a connection hole B351 and a chamber inlet B303.

The second container B32 may be coupled to a lower portion of the first container B31. The second container B32 may include a space B324 having an opened upper portion and a covered lower portion. The frame B33 may be accommodated inside the space B324 of the second container B32.

The second container B32 may include the cartridge outlet B304. The cartridge outlet B304 may be formed in a lateral portion B321 of the second container B32. The cartridge outlet B304 may be formed inside a port protruding from the lateral portion of the second container B32 in a thickness direction. The cartridge outlet B304 may communicate with the space B324. The second container B32 may include a discharge port B323. The discharge port B323 may have the cartridge outlet B304 formed therein. The discharge port B323 may protrude from the lateral portion B321 of the second container B32 to one side. The discharge port B323 may surround the cartridge outlet B304. The cartridge outlet B304 may be referred to as an outlet B304.

The frame B33 may be inserted into the space B324 inside the second container B32 to be coupled to the second container B32. A fastening element B326, which protrudes from a sidewall of the second container B32 to the space B324, may be fastened to the frame B33 to fix the frame B33.

The frame B33 may include a second chamber BC2 therein. The frame B33 may surround the second chamber BC2, and an upper portion of the second chamber BC2 may be opened. The upper portion of the second chamber BC2 may be covered by the plate B35.

The frame B33 may include the chamber inlet B303. The chamber inlet B303 may be formed by opening one surface of a sidewall surrounding the second chamber BC2. The chamber inlet B303 may be bent and extend upwards from the second chamber BC2 toward the inflow passage B302. One end of the chamber inlet B303 may communicate with the second chamber BC2, and the other end of the chamber inlet B303 may be connected to the inflow passage B302 and the connection hole B351.

The frame B33 may include a chamber outlet B332. The chamber outlet B332 may be formed in a lateral portion of the frame B33. The chamber outlet B332 may communicate with the second chamber BC2. The chamber outlet B332 may be formed inside a port protruding from the lateral portion of the frame B33 in a thickness direction. The chamber outlet B332 may communicate with the second chamber BC2. The chamber outlet B332 may be formed at a location corresponding to the cartridge outlet B304. The chamber outlet B332 may be formed at a location opposite to the chamber inlet B303 with respect to the second chamber BC2. When the frame B33 is coupled to the second container B32, the chamber outlet B332 and the cartridge outlet B304 may communicate with each other.

The frame B33 may include a wick coupling groove B334 therein. The wick coupling groove B334 may communicate with the second chamber BC2. The wick coupling groove B334 may be formed by the second chamber BC2 being depressing to one side thereof. The wick coupling grooves B334 may be formed in a pair, and the pair of wick coupling grooves B334 may be formed to be located opposite to each other in the second chamber BC2. An upper portion of the wick coupling groove B334 may be opened.

A wick B341 may have a cylindrical shape extending laterally long in the second chamber BC2. Both ends of the wick B341 may be located by being inserted into the pair of wick coupling grooves B334, respectively. A central portion of the wick B341 may be located in the second chamber BC2. The wick B341 may be connected to the first chamber BC1 to be supplied with a liquid from the first chamber BC1. The wick B341 may be fixed in the wick coupling groove B334 by the frame B33 and the plate B35.

The heater B342 may be wound around the central portion of the wick B341. The heater B342 may generate heat to heat the wick B341. For example, the heater B342 may be a resistive heater. The heater B342 may be arranged in the second chamber BC2. An end of the heater B342 may pass through a bottom of the frame B33 and be electrically connected to an electrode arranged at the bottom of the second container B32.

The plate B35 may be coupled between the first container B31 and the second container B32 or between the first container B31 and the frame B33. The plate B35 may cover and seal an opened portion of the first chamber BC1. The plate B35 may cover an upper portion of the frame B33. The plate B35 may cover and seal an opened portion of the second chamber BC2.

The plate B35 may have the connection hole B351 in one side thereof. The connection hole B351 may be located between the inflow passage B302 and the chamber inlet B303. The connection hole B351 may connect the inflow passage B302 to the chamber inlet B303.

The plate B35 may include a liquid inflow hole B354. A pair of liquid inflow holes B354 may be formed at locations corresponding to the wick coupling grooves B334. The pair of liquid inflow holes B354 may be located above both ends of the wick B341. The liquid inflow hole B354 may connect the first chamber BC1 to the wick coupling groove B334. The wick B341 may be connected to the first chamber BC1 through the liquid inflow hole B354.

A hook groove B335 may be formed above the chamber outlet B332 at a location adjacent to the chamber outlet B332. The hook B353 may protrude downwards from one side of the plate B35. The hook B353 may be inserted into and fastened to the hook groove B335 formed in an upper portion of the frame B33. The plate B35 may be fastened to the frame B33, and the first container B31 coupled to the second container B32 may press an edge portion of the plate B35 toward the frame B33.

A user may hold, in the mouth, the stick S inserted into the insertion space B134 and inhale air. While the upper case B200 is coupled to the body B100, air may be introduced into the cartridge inlet B301 through an opening B201 formed in the upper case B200. Air may be introduced into the cartridge B300 through the cartridge inlet B301 and may be discharged to the outside of the cartridge B300 through the cartridge outlet B304. The air introduced into the cartridge B300 may be discharged to the outside by sequentially passing through the inflow passage B302, the connection hole B351, the chamber inlet B303, the second chamber BC2, the chamber outlet B332, and the cartridge outlet B304.

When the heater B342 heats the wick B341, an aerosol may be formed from the wick B341 within the second chamber BC2. Air passing through the cartridge B300 may be accompanied by an aerosol from the second chamber BC2 and discharged to the cartridge outlet B304. The air discharged through the cartridge outlet B304 may be supplied through the connection flow path B133 to the insertion space B134 and the stick S inserted into the insertion space B134.

Referring to FIG. 3F, the upper body B120 may have an outer wall B121 and a partition wall B125. The outer wall B121 and the partition wall B125 may be connected to each other. The partition wall B125 may be formed to be vertically elongated between the pipe B130 and the cartridge coupling space B124a.

The extension portion B140 may be formed by extending from the upper portion of the upper body B120 to one side. The upper end surface B312 of the cartridge B300 may be covered by the extension portion B140. The extension portion B140 may cover the cartridge inlet B301 and the periphery thereof. A gap may be formed between the extension portion B140 and the cartridge inlet B301 and between a lower portion of the extension portion B140 and the upper end surface B312 of the cartridge B300. The gap may communicate the cartridge inlet B301 with the outside.

The pipe B130 may be formed long in a vertical direction. The pipe B130 may be formed as a hollow. The insertion space B134 may be formed inside the pipe B130. The insertion space B134 may be opened upwards. The insertion space B134 may extend vertically. The connection flow path B133 may be formed inside the pipe B130. The connection flow path B133 may be formed below the insertion space B134. One end of the connection flow path B133 may communicate with the outside of the pipe B130, and the other end of the connection flow path B133 may communicate with the insertion space B134. The connection flow path B133 may be bent to one side from a lower portion of the insertion space B134.

A first sensor B161 may be installed inside the extension portion B140. The first sensor B161 may face the upper end surface B312 of the cartridge B300 or the cartridge inlet B301. The first sensor B161 may be installed adjacent to the cartridge inlet B301. The first sensor B161 may be located above the cartridge inlet B301. The first sensor B161 may overlap the cartridge inlet B301 on the basis of the vertical direction.

The first sensor B161 may sense an ambient air flow. The first sensor B161 may be an air flow sensor or a pressure sensor. The first sensor B161 may sense a flow of air through a change in ambient air pressure. At a location adjacent to the cartridge inlet B301, the extension portion B140 may include a first sensing hole B144 for sensing an air flow. The first sensor B161 may be mounted on a substrate arranged inside the extension portion B140 and may be electrically connected to a controller (not shown). The controller may control operations of various types of components connected, on the basis that the first sensor B161 detects the flow of air.

A first sealing portion B151 may be arranged between a first partition wall portion B1251 and an inner plate B171. The first sealing portion B151 may surround and be in contact with an upper end portion of the first partition wall portion B1251. The first sealing portion B151 may be in contact with a lower end of the inner plate B 171.

A sensor accommodation portion B156 of a second sealing portion may seal the periphery of a first sensing hole B144. The sensor accommodation portion B156 may be in contact with an extension plate around the first sensing hole B144. A second sensing hole formed in the sensor accommodation portion B156 may communicate with the first sensing hole B144. The sensor accommodation portion B156 may surround and be in contact with the first sensor B161.

Accordingly, a failure of a substrate or sensor may be prevented by foreign substances, aerosol discharged from around an opening of the pipe B130, or foreign substances through the first sensing hole B144.

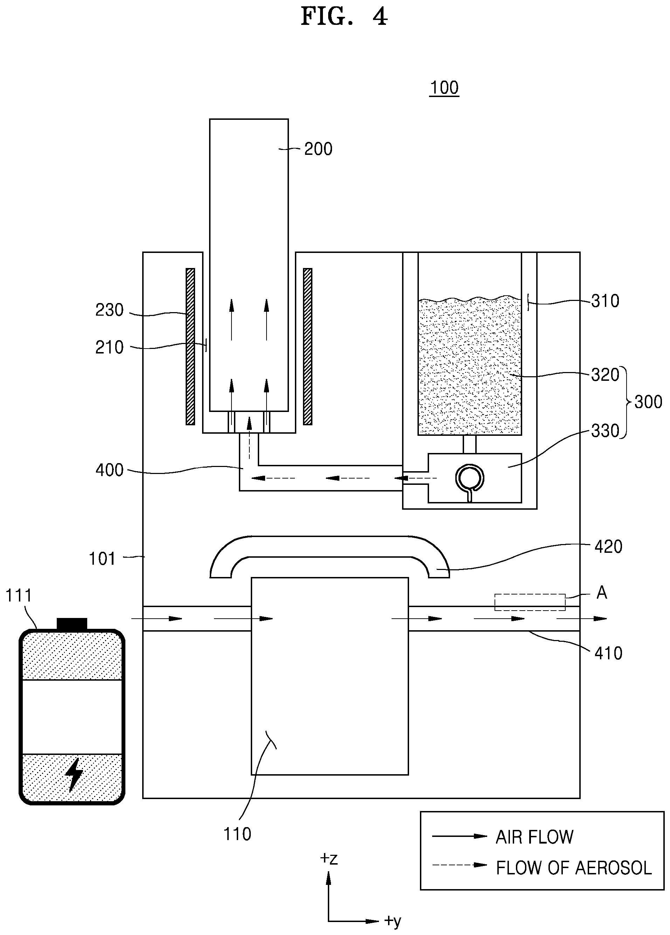

FIG. 4 is a cross-sectional view for describing a first heat dissipation member, a first airflow passage, and a second airflow passage of an aerosol generating device according to an embodiment.

Referring to FIG. 4, the aerosol generating device 100 according to an embodiment may include the housing 101, the first accommodation space 210, a second accommodation space 310, the battery accommodation space 110, a first heat dissipation member 420, a first airflow passage 400, and a second airflow passage 410. The elements of the aerosol generating device 100 according to an embodiment are identical or similar to at least one of the elements of the aerosol generating device 100 of FIGS. 1, 2A, 2B, and 3A to 3F, and redundant descriptions thereof are omitted. Solid arrows in FIG. 4 indicate the flow of air, and dashed arrows in FIG. 4 indicate the flow of aerosol.

The housing 101 may include the first accommodation space 210 for accommodating the aerosol generating article 200, the second accommodation space 310 for accommodating the cartridge 300, and the battery accommodation space 110 for accommodating the battery 111.

The housing 101 may form the overall exterior of the aerosol generating device 100, and the elements of the aerosol generating device 100 may be arranged in the internal space of the housing 101. For example, the first accommodation space 210, the second accommodation space 310, and the battery accommodation space 110 may be arranged in the housing 101. However, the example is not limited thereto, and in another example, a battery and a processor may be further arranged in the housing 101.

At least a portion of the aerosol generating article 200 may be inserted into the first accommodation space 210. A length of the aerosol generating article 200 inserted into the first accommodation space 210 may correspond to a length of an area of the aerosol generating article 200 in which an aerosol generating material and/or medium is included. A portion of the aerosol generating article 200 may be inserted into the housing 101, and another portion of the aerosol generating article 200 may protrude toward the outside of the housing 101.

In a state in which the aerosol generating article 200 is inserted into the first accommodation space 210, the aerosol generating material and/or medium may be heated by an article heater 230 to generate vapor. The vapor generated from the aerosol generating article 200 may be mixed with air introduced into the first accommodation space 210 and may generate aerosol. The user may inhale the generated aerosol by bringing his or her mouth into contact with the other portion of the aerosol generating article 200 protruding toward the outside of the housing 101.

The cartridge 300 may include an atomizing unit which has a storage tank 320 for storing an aerosol generating material and a cartridge heater 330 for heating the aerosol generating material. In a state in which the cartridge 300 is accommodated in the second accommodation space 310, the aerosol generating material stored in the storage tank 320 may be heated by the cartridge heater 330 to generate vapor. The vapor generated from the cartridge 300 may be mixed with air introduced into the second accommodation space 310 and may generate aerosol.

The first airflow passage 400 may be arranged in the housing 101 and may connect the first accommodation space 210 and the second accommodation space 310 to each other. The aerosol generated from the cartridge 300 accommodated in the second accommodation space 310 may be introduced into the first accommodation space 210 through the first airflow passage 400 and mixed with the aerosol generated from the aerosol generating article 200 inserted into the first accommodation space 210. The user may inhale the mixed aerosol by bringing his or her mouth into contact with the other portion of the aerosol generating article 200 protruding toward the outside of the housing 101.

The aerosol generated from the cartridge 300 may cool in a process of being moved from the second accommodation space 310 to the first accommodation space 210 along the first airflow passage 400. The aerosol generated from the cartridge 300 may be mixed with the aerosol generated from the aerosol generating article 200 in a cooled state, the mixed aerosol may also cool. Accordingly, the user may inhale the aerosol cooled to a temperature suitable for inhalation by contacting his or her mouth to the other portion of the aerosol generating article 200 protruding toward the outside of the housing 101.

The aerosol generating device 100 may include the first heat dissipation member 420 arranged in the housing 101 to absorb heat generated inside the battery accommodation space 110. For example, the first heat dissipation member 420 may be arranged between the first airflow passage 400 and the battery accommodation space 110 and may absorb heat generated inside the battery accommodation space 110.

The battery 111 may be removably coupled to the battery accommodation space 110. The battery 111 may be coupled to the battery 111 and may supply power for operating the elements of the aerosol generating device 100. When the battery 111 is charged or used, heat may be generated from the battery 111, and the heat generated from the battery 111 may affect performance of the aerosol generating device 100. For example, due to the heat generated from the battery 111, the aerosol moving along the first airflow passage 400 may not cool to an appropriate temperature.

When the battery 111 is overcharged or over-discharged, or the battery 111 ages or the durability thereof is weakened due to external impact, an abnormally large amount of heat may be generated from the battery 111. The excessive heat generated from the battery 111 may affect performance of other elements of the aerosol generating device 100 arranged around the battery 111. For example, due to the excessive heat generated from the battery 111, the article heater 230 and/or the cartridge heater 330 may be subjected to malfunction and/or damage.

The first heat dissipation member 420 may be arranged between the first airflow passage 400 and the battery accommodation space 110, thereby preventing the heat generated from the battery 111 from being transferred from the battery accommodation space 110 to the first airflow passage 400, the article heater 230, and/or the cartridge heater 330.

The first heat dissipation member 420 may absorb heat generated inside the battery accommodation space 110, thereby preventing the heat generated from the battery accommodation space 110 from being transferred to the first airflow passage 400. The first heat dissipation member 420 may prevent a temperature rise of the aerosol generated from the cartridge 300 and/or the aerosol generated from the aerosol generating article 200 due to the heat generated from the battery 111. The aerosol generating device 100 may have the first heat dissipation member 420 arranged between the first airflow passage 400 and the battery accommodation space 110, so that the user may inhale aerosol cooled to an appropriate temperature.

The first heat dissipation member 420 may absorb heat generated inside the battery accommodation space 110, thereby preventing the heat generated from the battery accommodation space 110 from being transferred to the article heater 230 and the cartridge heater 330. The aerosol generating device 100 may have the first heat dissipation member 420 arranged between the first airflow passage 400 and the battery accommodation space 110, thereby preventing the article heater 230 and the cartridge heater 330 from malfunctioning and/or being damaged by the heat generated from the battery 111.

In another example, the first heat dissipation member 420 may be arranged around the battery accommodation space 110 inside the housing 101 and may absorb heat generated inside the battery accommodation space 110. The first heat dissipation member 420 may be positioned inside the housing 101 and may be arranged to surround at least one area of an outer surface of the battery accommodation space 110.

The first heat dissipation member 420 may be arranged around the battery accommodation space 110 inside the housing 101, thereby preventing the heat generated from the battery 111 from being transferred from the battery accommodation space 110 to the article heater 230 and/or the cartridge heater 330. The aerosol generating device 100 may have the first heat dissipation member 420 arranged between the first airflow passage 400 and the battery accommodation space 110, thereby preventing the article heater 230 and the cartridge heater 330 from malfunctioning and/or being damaged by the heat generated from the battery 111.

The second airflow passage 410 may be arranged in the housing 101 and may connect the outside of the aerosol generating device 100 and the battery accommodation space 110 to each other. External air may move into the battery accommodation space 110 along the second airflow passage 410 and then move back to the outside of the aerosol generating device 100 along the second airflow passage 410.

The housing 101 may further include one or more air holes passing through the housing 101. The external air may be introduced into the aerosol generating device 100 through one air hole and may move into the battery accommodation space 110 along the second airflow passage 410, and then move along the second airflow passage 410 again to be discharged to the outside of the aerosol generating device 100 through another air hole.

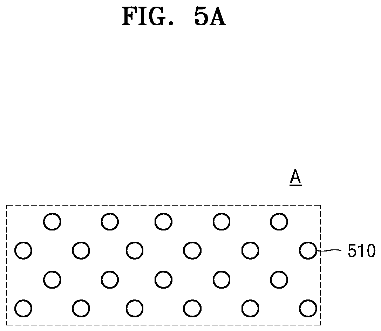

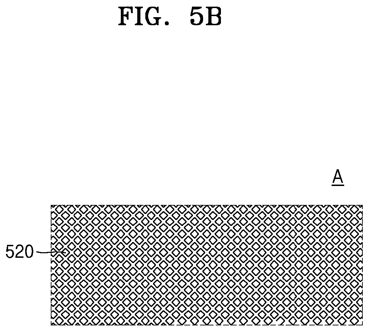

The second airflow passage 410 may include at least one small hole in at least one area (e.g., region A shown in FIG. 4). For example, referring to FIG. 5A, the second airflow passage 410 may include a plurality of perforations 510. When the plurality of perforations 510 are arranged in the second airflow passage 410, the ventilation of the battery accommodation space 110 may be improved. In another example, referring to FIG. 5B, the second airflow passage 410 may include a structure 520 having a mesh shape. For example, the structure 520 having the mesh shape may be a sheet of metal. However, the example is not limited thereto, and in another example, the structure 520 having the mesh shape may be a sheet including plastic or polyethylene terephthalate (PET). When the second airflow passage 410 includes the structure 520 having the mesh shape, the ventilation of the battery accommodation space 110 may be improved.

Because the second airflow passage 410 may effectively emit heat generated from the battery 111, the external heat generation of the battery accommodation space 110 may be minimized. When excessive heat is generated from the battery 111, the elements of the aerosol generating device 100 arranged around the battery 111 may break down or malfunction due to the heat. In addition, the battery 111 may generate heat to an excessively high temperature due to the excessively high temperature due to excessive heat generated from the battery 111, and thus, users of the aerosol generating device 100 may suffer burns on their hands.

In the aerosol generating device 100, external heat generation of the battery accommodation space 110 may be minimized through the second airflow passage 410, thereby preventing malfunction and/or damage to the internal elements of the aerosol generating device 100 due to the heat generated from the battery 111 and preventing the users of the aerosol generating device 100 from suffering burns on their hands from the heat generated from the battery 111.

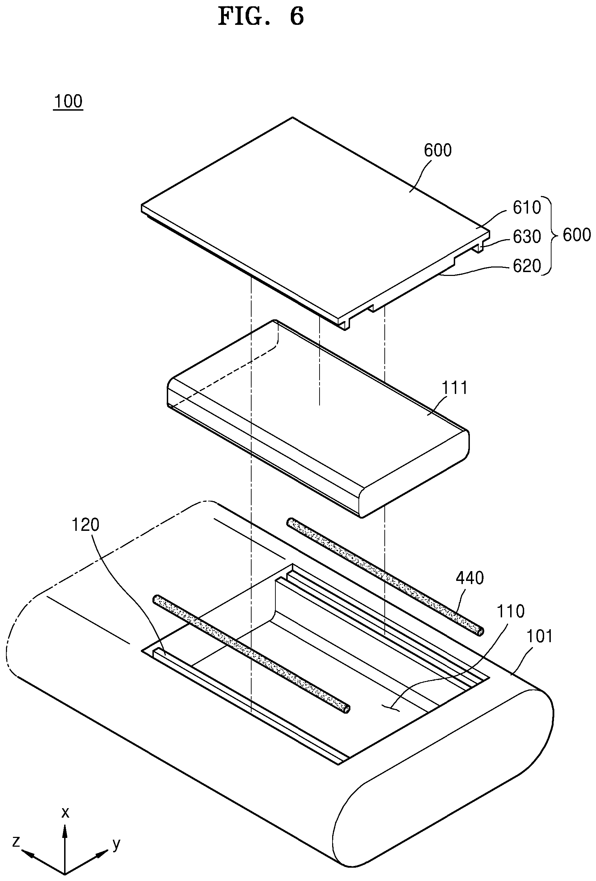

FIG. 6 is a diagram for describing a second heat dissipation member of an aerosol generating device according to an embodiment. Referring to FIG. 6, the aerosol generating device 100 according to an embodiment may include the housing 101, the battery 111, a second heat dissipation member 440, and a battery cover 600. FIG. 6 merely briefly shows elements of the aerosol generating device 100 for describing the second heat dissipation member 440 and the battery cover 600, and the elements included in the aerosol generating device 100 according to an embodiment are not necessarily limited to the elements shown in FIG. 6. The elements of the aerosol generating device 100 according to an embodiment may be replaced with other elements, or other elements may be added to the aerosol generating device 100. For example, at least one of the elements of the aerosol generating device 100 of FIG. 6 may be identical or similar to the elements of the aerosol generating device 100 described with reference to FIGS. 1 to 5, and redundant descriptions thereof are omitted below.

The housing 101 may form the exterior of the aerosol generating device 100, and the elements of the aerosol generating device 100 may be arranged in the internal space of the housing 101. The housing 101 may include the battery accommodation space 110 for accommodating the battery 111. The battery accommodation space 110 may be formed on one lateral side (e.g., a side directed toward a +x-axis) of the housing 101. The battery accommodation space 110 may be sunken toward inside the housing 101 to accommodate the battery 111. A depth of the sunken battery accommodation space 110 may correspond to a thickness (e.g., a length of the battery 111 in an x-axis direction) of the battery 111.

The battery 111 may be coupled to or accommodated in the battery accommodation space 110 and may supply power for operating the elements arranged in the internal space of the housing 101. The battery 111 may be formed as a rectangular prism of which a cross-section (e.g., a cross-section of the battery 111 taken along a xy plane) is a rectangle or a rectangle with round edges, but is not limited thereto.

The battery cover 600 may be removably coupled to the housing 101 to protect the battery 111 accommodated in the battery accommodation space 110 from external impact or foreign substances. The battery cover 600 may open the battery accommodation space 110 when removed or separated from the housing 101, and the battery cover 600 may close the battery accommodation space when attached or coupled to the housing 101.

When the battery cover 600 is removed from the housing 101, the battery accommodation space 110 may be exposed to the outside. In a state in which the battery cover 600 is removed from the housing 101, the battery cover 600 that has reached its end of life or requires charging may be removed from the battery accommodation space 110, and a new or charged battery 111 may be coupled to the battery accommodation space 110.

The battery cover 600 may include an external battery cover 610, an internal battery cover 620, and a protrusion 630. The battery cover 600 may include one or more small holes in at least one area. For example, the battery cover 600 may include a plurality of perforations. When the plurality of perforations are arranged in the battery cover 600, the ventilation of the battery accommodation space 110 may be improved. In another example, the battery cover 600 may include a mesh-shaped structure. The mesh-shaped structure may be a sheet of metal. However, the disclosure is not limited thereto, and the mesh-shaped structure may be a sheet including plastic or polyethylene terephthalate (PET). When the battery cover 600 includes the mesh-shaped structure, the ventilation of the battery accommodation space 110 may be improved.

The external battery cover 610 may be arranged in one area of the housing 101 to form the exterior (e.g., a surface directed toward the +x-axis) of the battery cover 600. After the battery 111 is accommodated in the battery accommodation space 110, the external battery cover 610 may close the battery accommodation space 110 to protect the battery 111 from external impact or foreign substances.

The internal battery cover 620 may be formed in the center of the inner surface (e.g., a surface in a -x-axis direction) of the battery cover 600 and may protrude in a direction (e.g., the - x-axis direction) toward inside the battery accommodation space 110. When the battery 111 is accommodated in the battery accommodation space 110 and the battery cover 600 and the housing 101 are coupled to each other, the internal battery cover 620 may press the battery 111 in a direction (e.g., the -x-axis direction) toward the housing 101. When the battery 111 is press by the internal battery cover 620, the battery 111 may be fixed in the battery accommodation space 110 and thus may be protected from external impact.

The protrusion 630 may be formed along an edge of the inner surface of the battery cover 600 and may protrude in a direction toward inside the battery accommodation space 110. For example, when the inside of the battery cover 600 is viewed in a direction toward the +x-axis, the protrusion 630 may have a shape in which a rectangular ring protrudes. The protrusion 630 may be inserted into a groove 120 formed in the housing 101 and fitted into the groove 120. When the protrusion 630 of the battery cover 600 is fitted into the groove 120 of the housing 101, the battery cover 600 may be coupled or fixed to the housing 101.

The second heat dissipation member 440 may be positioned between the protrusion 630 and the groove 120 when the battery cover 600 is coupled to the housing 101, and may absorb heat generated inside the battery accommodation space 110.

Because the second heat dissipation member 440 may prevent heat generated from the battery 111 from being transferred from the battery accommodation space 110 to the article heater 230 and/or the cartridge heater 330, malfunction and/or damage to the article heater 230 and the cartridge heater 330 due to the heat generated from the battery 111 may be prevented.

Because the second heat dissipation member 440 may effectively emit heat generated from the battery 111, the external heat generation of the battery accommodation space 110 may be minimized. The second heat dissipation member 440 may prevent users of the aerosol generating device 100 from suffering burns on their hands due to the heat generated from the battery 111.

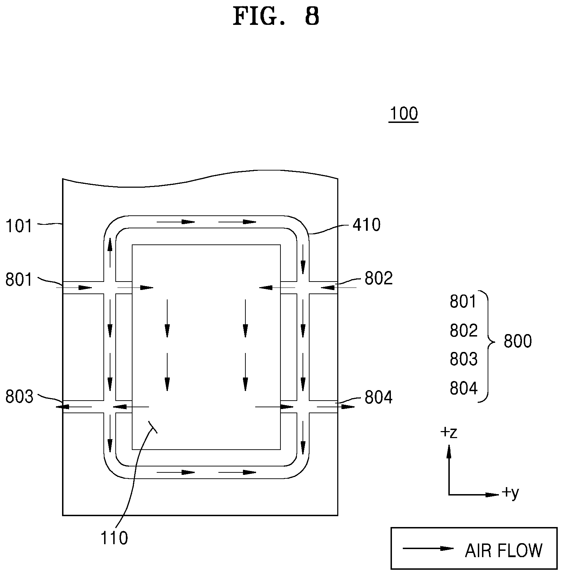

Although not shown, the aerosol generating device 100 of FIG. 6 may further include the second airflow passage described with reference to FIG. 4, and the second airflow passage is described below with reference to FIG. 8.

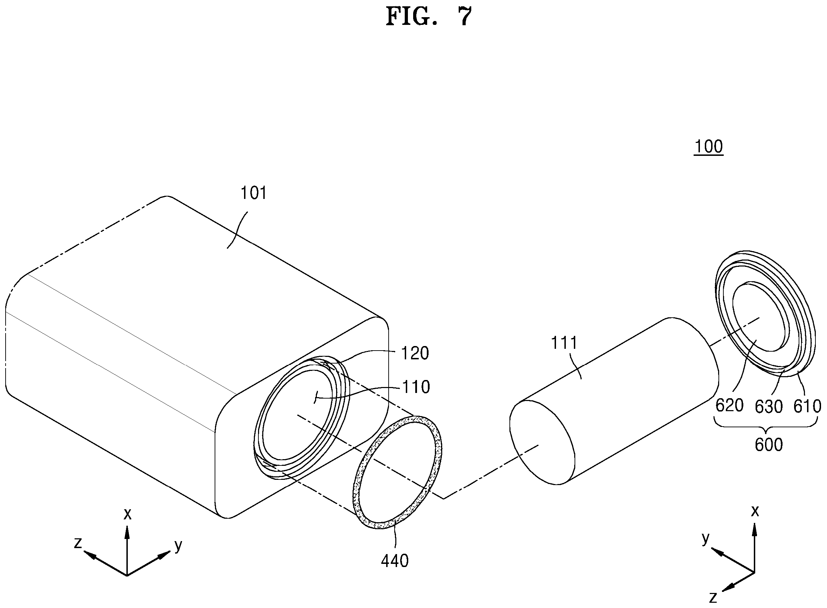

FIG. 7 is a diagram for describing the second heat dissipation member of the aerosol generating device according to another embodiment. Referring to FIG. 7, the aerosol generating device 100 according to another embodiment may include the housing 101, the battery 111, the second heat dissipation member 440, and the battery cover 600. The aerosol generating device 100 of FIG. 7 may be an aerosol generating device that is different from the aerosol generating device 100 of FIG. 6 only with respect to the shape and arrangement structure of the housing 101, the battery 111, the second heat dissipation member 440, and the battery cover 600, and redundant descriptions thereof are omitted below.

The housing 101 may include the battery accommodation space 110 for accommodating the battery 111. The battery accommodation space 110 may be formed on one lateral side (e.g., a side directed toward an -z-axis) of the housing 101. The battery accommodation space 110 may be sunken toward inside the housing 101 to accommodate the battery 111. A depth of the sunken battery accommodation space 110 may correspond to a length (e.g., a length of the battery 111 in a z-axis direction) of the battery 111.

The battery 111 may be coupled to or accommodated in the battery accommodation space 110 and may supply power for operating the elements arranged in the internal space of the housing 101. The battery 111 may be formed as a cylinder of which a cross-section (e.g., a cross-section of the battery 111 taken along a xy plane) is a circle or ellipse, but is not limited thereto.

The battery cover 600 may be removably coupled to the housing 101 to protect the battery 111 accommodated in the battery accommodation space 110 from external impact or foreign substances. The battery cover 600 may include the external battery cover 610, the internal battery cover 620, and the protrusion 630.

The external battery cover 610 may be arranged in one area of the housing 101 to form the exterior (e.g., a surface directed toward the -z-axis) of the battery cover 600. The internal battery cover 620 may be formed in the center of the inner surface (e.g., a surface in a +z-axis direction) of the battery cover 600 and may protrude in a direction (e.g., the +z-axis direction) toward inside the battery accommodation space 110. When the battery 111 is accommodated in the battery accommodation space 110 and the battery cover 600 and the housing 101 are coupled to each other, the internal battery cover 620 may press the battery 111 in a direction (e.g., the +z-axis direction) toward the housing 101.

The protrusion 630 may be formed along an edge of the inner surface of the battery cover 600 and may protrude in a direction toward inside the battery accommodation space 110. For example, when the inside of the battery cover 500 is viewed in a direction toward the -z-axis, the protrusion 630 may have a shape in which a circular ring protrudes. The protrusion 630 may be inserted into the groove 120 formed in the housing 101 and fitted into the groove 120. When the protrusion 630 of the battery cover 600 is fitted into the groove 120 of the housing 101, the battery cover 600 may be coupled or fixed to the housing 101.

The second heat dissipation member 440 may be positioned between the protrusion 630 and the groove 120 when the battery cover 600 is coupled to the housing 101, and may absorb heat generated inside the battery accommodation space 110.

Because the second heat dissipation member 440 may prevent heat generated from the battery 111 from being transferred from the battery accommodation space 110 to the article heater 230 and/or the cartridge heater 330, malfunction and/or damage to the article heater 230 and the cartridge heater 330 due to the heat generated from the battery 111 may be prevented.

Because the second heat dissipation member 440 may effectively emit heat generated from the battery 111, the external heat generation of the battery accommodation space 110 may be minimized. The second heat dissipation member 440 may prevent users of the aerosol generating device 100 from suffering burns on their hands due to the heat generated from the battery 111.

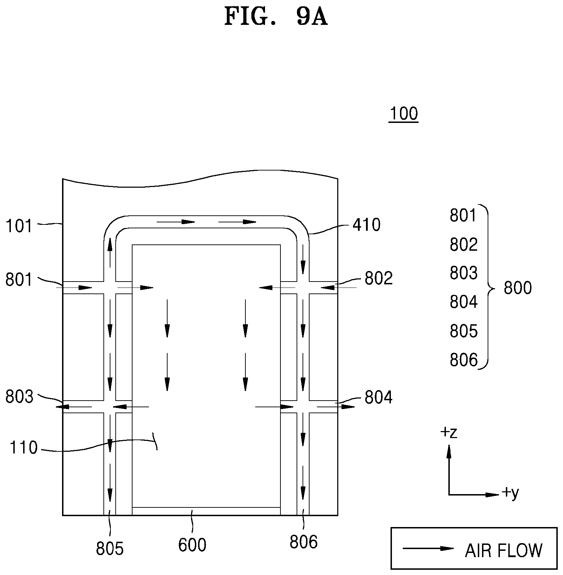

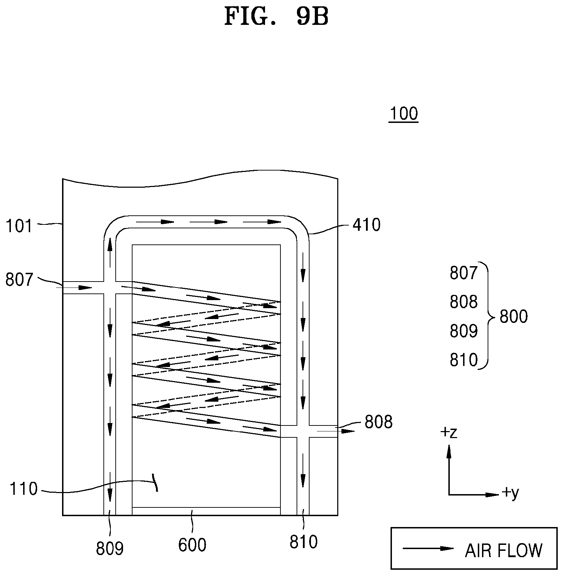

Although not shown, the aerosol generating device 100 of FIG. 7 may further include the second airflow passage described with reference to FIG. 4, and the second airflow passage is described below with reference to FIGS. 9A and 9B.

FIG. 8 is a diagram for describing a structure of arrangement of the second airflow passage of FIG. 6. FIG. 8 is a cross-sectional view, taken along a yz plane, an aerosol generating device in which the second airflow passage 410 and an air hole 800 are added to the aerosol generating device 100, and redundant descriptions thereof are omitted below. In FIG. 8, arrows indicate a path of movement of air (or "external air").

Referring to FIG. 8, the second airflow passage 410 may be positioned inside the housing 101 so that external air introduced into the battery accommodation space 110 moves along an edge of the battery accommodation space 110 and then moves back to the outside of the aerosol generating device 100. The second airflow passage 410 may be formed in a shape that is bent a plurality of times in a direction parallel to a lengthwise direction (e.g., the z-axis direction) of the housing 101, in a vertical direction, or in a diagonal shape. As the second airflow passage 410 is formed in a more complex shape, the heat generated from the battery 111 may be more efficiently released to the outside of the aerosol generating device 100, thereby minimizing external heat generation of the battery accommodation space 110.

The housing 101 may include one or more air holes 800 passing through the housing 101. For example, a first air hole 801 and a third air hole 803 may be formed in one side (e.g., a side surface directed toward the -y-axis) of the housing 101, and a second air hole 802 and a fourth air hole 804 may be formed in another side (e.g., a side surface directed toward the +y direction) of the housing 101. However, the number and arrangement structure of the air hole 800 are not limited thereto. In another example, the third air hole 803 and the fourth air hole 804 may be formed in another side surface (e.g., a side surface directed toward the -z-axis) of the housing 101.

The aerosol generating device 100 may effectively release heat generated from the battery 111 by using the second airflow passage 410 and the air hole 800, thereby minimizing external heat generation of the battery accommodation space 110. In the aerosol generating device 100 having the second airflow passage 410 and the air hole 800, external heat generation of the battery accommodation space 110 may be minimized, thereby preventing malfunction and/or damage to the internal elements of the aerosol generating device 100 due to the heat generated from the battery 111 and preventing the users of the aerosol generating device 100 from suffering burns on their hands from the heat generated from the battery 111.

FIG. 9A is a diagram for describing an arrangement structure of the second airflow passage of FIG. 7, according to an embodiment, and FIG. 9B is a diagram for describing an arrangement structure of the second airflow passage of FIG. 7, according to another embodiment. FIGS. 9A and 9B are cross-sectional views, taken along the yz plane, an aerosol generating device in which the second airflow passage 410 and an air hole 800 are added to the aerosol generating device 100, and redundant descriptions thereof are omitted below. In FIGS. 9A and 9B, arrows indicate a path of movement of air (or "external air").

Referring to FIG. 9A, the second airflow passage 410 may be positioned inside the housing 101 so that external air introduced into the battery accommodation space 110 moves along an edge of the battery accommodation space 110 and then moves back to the outside of the aerosol generating device 100. The second airflow passage 410 may be formed in a shape that is bent a plurality of times in a direction parallel to the lengthwise direction (e.g., the z-axis direction) of the housing 101, in a vertical direction, or in a diagonal shape. As the second airflow passage 410 is formed in a more complex shape, the heat generated from the battery 111 may be more efficiently released to the outside of the aerosol generating device 100, thereby minimizing external heat generation of the battery accommodation space 110.

The housing 101 may include one or more air holes 800 passing through the housing 101. For example, the first air hole 801 and the third air hole 803 may be formed in one side surface (e.g., a side surface directed toward the -y-axis) of the housing 101, the second air hole 802 and the fourth air hole 804 may be formed in another side surface (e.g., a side surface directed toward the +y-axis) of the housing 101, and a fifth air hole 805 and a sixth air hole 806 may be formed in another side surface (e.g., a side surface directed toward the -z-axis) of the housing 101. However, the number and arrangement structure of the air hole 800 are not limited thereto. In another example, three air holes may be formed in one side surface (e.g., a side surface directed toward the -y-axis) of the housing 101, and four air holes may be formed in another side surface (e.g., a side surface directed toward the +y-axis) of the housing 101.

Referring to FIG. 9B, the second airflow passage 410 may be positioned inside the housing 101 so that external air introduced into the battery accommodation space 110 moves in a spiral direction along an outer surface of the battery accommodation space 110 and then moves back to the outside of the aerosol generating device 100. The second airflow passage 410 may be formed in a shape that is bent a plurality of times in a direction parallel to a lengthwise direction (e.g., the z-axis direction) of the housing 101, in a vertical direction, or in a diagonal shape. As the second airflow passage 410 is formed in a more complex shape, the heat generated from the battery 111 may be more efficiently released to the outside of the aerosol generating device 100, thereby minimizing external heat generation of the battery accommodation space 110.

The housing 101 may include one or more air holes 800 passing through the housing 101. For example, a seventh air hole 807 may be formed in one side surface (e.g., a side surface directed toward the -y-axis) of the housing 101, an eighth air hole 808 may be formed in another side surface (e.g., a side surface directed toward the +y-axis) of the housing 101, and a ninth air hole 809 and a tenth air hole 810 may be formed in another side surface (e.g., a side surface directed toward the -z-axis) of the housing 101. However, the number and arrangement structure of the air hole 800 are not limited thereto.

The aerosol generating device 100 may effectively release heat generated from the battery 111 by using the second airflow passage 410 and the air hole 800, thereby minimizing external heat generation of the battery accommodation space 110. In the aerosol generating device 100 having the second airflow passage 410 and the air hole 800, external heat generation of the battery accommodation space 110 may be minimized, thereby preventing malfunction and/or damage to the internal elements of the aerosol generating device 100 due to the heat generated from the battery 111 and preventing the users of the aerosol generating device 100 from suffering burns on their hands from the heat generated from the battery 111.

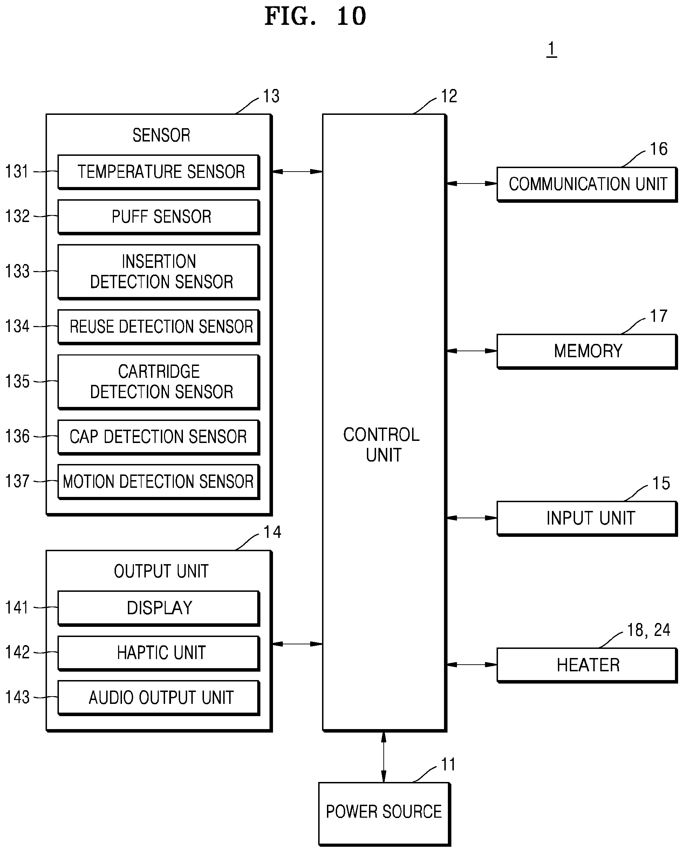

FIG. 10 is a block diagram of an aerosol generating device according to another embodiment.

The aerosol generating device 1 may include a power source 11, a controller 12, a sensor 13, an output unit 14, an input unit 15, a communicator 16, a memory 17, and at least one heater 18 and 24. However, an internal structure of the aerosol generating device 1 is not limited to that illustrated in FIG. 1. In other words, according to the design of the aerosol generating device 1, one of ordinary skill in the art related to the present embodiment that some of the components shown in FIG. 1 may be omitted or new components may be added.

The sensor 13 may detect a state of the aerosol generating device 1 or a state around the aerosol generating device 1 and transmit detected information to the controller 12. On the basis of the detected information, the controller 12 may control the aerosol generating device 1 to perform various functions such as control of operations of the cartridge heater 24 and/or the heater 18, a restriction on smoking, determination of whether or not the stick S and/or the cartridge 19 are inserted, and a notification display.

The sensor 13 may include at least one of a temperature sensor 11031, a puff sensor 11032, an insertion detection sensor 11033, a reuse detection sensor 11034, a cartridge detection sensor 11035, a cap detection sensor 11036, and a motion detection sensor 11037.

The temperature sensor 11031 may detect a temperature at which the cartridge heater 24 and/or the heater 18 are heated. The aerosol generating device 1 may include a separate temperature sensor for detecting the temperatures of the cartridge heater 24 and/or the heater 18, or the cartridge heater 24 and/or the heater 18 may operate as temperature sensors.

The temperature sensor 11031 may output a signal corresponding to the temperature of the cartridge heater 24 and/or the heater 18. For example, the temperature sensor 11031 may include a resistor element whose resistance value changes in correspondence to a change in the temperature of the cartridge heater 24 and/or the heater 18. The temperature sensor 11031 may be implemented by a thermistor or the like, which is an element using a property of changing resistance according to temperature. Here, the temperature sensor 11031 may output a signal corresponding to the resistance value of the resistor element as a signal corresponding to the temperature of the cartridge heater 24 and/or the heater 18. For example, the temperature sensor 11031 may include a sensor that detects a resistance value of the cartridge heater 24 and/or the heater 18. Here, the temperature sensor 11031 may output a signal corresponding to the resistance value of the cartridge heater 24 and/or the heater 18 as a signal corresponding to the temperature of the cartridge heater 24 and/or the heater 18.

The temperature sensor 11031 may be arranged around the power source 11 to monitor a temperature of the power source 11. The temperature sensor 11031 may be arranged adjacent to the power source 11. For example, the temperature sensor 11031 may be attached to one surface of a battery that is the power source 11. For example, the temperature sensor 11031 may be mounted on one surface of a PCB.

The temperature sensor 11031 may be arranged inside the body 10 to detect an internal temperature of the body 10.

The puff sensor 11032 may detect a puff by a user on the basis of various physical changes in an air flow path. The puff sensor 11032 may output a signal corresponding to the puff. For example, the puff sensor 11032 may be a pressure sensor. The puff sensor 11032 may output a signal corresponding to internal pressure of the aerosol generating device 1. Here, the internal pressure of the aerosol generating device 1 may correspond to pressure of the air flow path through which a gas flows. The puff sensor 11032 may be arranged in correspondence to the air flow path through which the gas flows in the aerosol generating device 1.

The insertion detection sensor 11033 may detect insertion and/or removal of the stick S. The insertion detection sensor 11033 may detect a signal change due to the insertion and/or removal of the stick S. The insertion detection sensor 11033 may be installed around an insertion space. The insertion detection sensor 11033 may detect the insertion and/or removal of the stick S according to a change in a dielectric constant inside the insertion space. For example, the insertion detection sensor 11033 may be an inductive sensor and/or a capacitance sensor.

The inductive sensor may include at least one coil. The coil of the inductive sensor may be arranged adjacent to the insertion space. For example, when a magnetic field changes around the coil through which a current flows, characteristics of the current flowing through the coil may change according to Faraday's law of electromagnetic induction. Here, the characteristics of the current flowing through the coil may include a frequency of an alternating current, a current value, a voltage value, an inductance value, an impedance value, and the like.

The inductive sensor may output a signal corresponding to the characteristics of the current flowing through the coil. For example, the inductive sensor may output a signal corresponding to an inductance value of the coil.

The capacitance sensor may include a conductor. The conductor of the capacitance sensor may be arranged adjacent to the insertion space. The capacitance sensor may output a signal corresponding to an ambient electromagnetic characteristic, e.g., a capacitance around the conductor. For example, when the stick S including a metal wrapper is inserted into the insertion space, the electromagnetic characteristic around the conductor may be changed by the wrapper of the stick S.

The reuse detection sensor 11034 may detect whether or not the stick S is reused. The reuse detection sensor 11034 may be a color sensor. The color sensor may detect a color of the stick S. The color sensor may detect a color of a portion of the wrapper wrapping the outside of the stick S. The color sensor may detect a value for an optical characteristic corresponding to a color of an object, on the basis of light reflected from the object. For example, the optical characteristic may be a wavelength of light. The color sensor may be implemented as a single component with a proximity sensor or may be implemented as a separate component distinguished from the proximity sensor.

At least a portion of the wrapper constituting the stick S may have a color changing by an aerosol. When the stick S is inserted into the insertion space, the reuse detection sensor 11034 may be arranged in correspondence to a location at which at least the portion of the wrapper whose color changes by the aerosol is arranged. For example, before the stick S is used by the user, the color of at least the portion of the wrapper may be a first color. Here, when at least the portion of the wrapper is wetted by the aerosol while the aerosol generated by the aerosol generating device 1 passes through the stick S, the color of at least the portion of the wrapper may be changed to a second color. The color of at least the portion of the wrapper may be maintained in the second color after changing from the first color to the second color.

The cartridge detection sensor 11035 may detect mounting and/or removal of the cartridge 19. The cartridge detection sensor 11035 may be implemented by an inductance-based sensor, a capacitive sensor, a resistance sensor, a hall sensor (a hall IC) using a hall effect, or the like.

The cap detection sensor 11036 may detect mounting and/or removal of a cap. When the cap is detached from the body 10, a portion of the cartridge 19 and the body 10 covered by the cap may be exposed to the outside. The cap detection sensor 11036 may be implemented by a contact sensor, a hall sensor (a hall IC), an optical sensor, or the like.

The motion detection sensor 11037 may detect a motion of the aerosol generating device 1. The motion detection sensor 11037 may be implemented as at least one of an acceleration sensor and a gyro sensor.

In addition to the sensors 11031 to 11037 described above, the sensor 13 may further include at least one of a humidity sensor, an atmospheric pressure sensor, a magnetic sensor, a position sensor (e.g., a global positioning system (GPS)), and a proximity sensor. Functions of the respective sensors may be intuitively inferred from names thereof by one of ordinary skill in the art, and thus, detailed descriptions thereof may be omitted.

The output unit 14 may output information regarding the state of the aerosol generating device 1 and provide the information to the user. The output unit 14 may include at least one of a display 11041, a haptic unit 11042, and a sound output unit 11043, but is not limited thereto. When the display 11041 and a touch pad form a layer structure to form a touch screen, the display 11041 may be used as an input device in addition to an output device.

The display 11041 may visually provide the user with information regarding the aerosol generating device 1. For example, the information regarding the aerosol generating device 1 may refer to various types of information such as a charging/discharging state of the power source 11 of the aerosol-generating device 1, a preheating state of the heater 18, the insertion/removal state of the stick S and/or the cartridge 19, the mounting/removal state of the cap, and the restriction on use of the aerosol generating device 1 (e.g., detection of an abnormal article), and the display 11041 may output the information to the outside. For example, the display 11041 may be in the form of a light emitting diode (LED) light emitting device. For example, the display 11041 may be a liquid crystal display (LCD) panel, an organic light emitting display (OLED) panel, or the like.

The haptic unit 11042 may tactilely provide the user with the information regarding the aerosol generating device 1 by converting an electrical signal into a mechanical stimulus or an electrical stimulus. For example, when initial power is supplied to the cartridge heater 24 and/or the heater 18 for a set time, the haptic unit 11042 may generate vibration corresponding to completion of initial preheating. The haptic unit 11042 may include a vibration motor, a piezoelectric element, or an electrical stimulation device.

The sound output unit 11043 may audibly provide the user with the information regarding the aerosol generating device 1. For example, the sound output unit 11043 may convert the electrical signal into a sound signal and output the sound signal to the outside.

The power supply 11 may supply power used to operate the aerosol generating device 1. The power source 11 may supply power so that the cartridge heater 24 and/or the heater 18 may be heated. In addition, the power source 11 may supply power needed for operations of the sensor 13, the output unit 14, the input unit 15, the communicator 16, and the memory 17, which are other components provided within the aerosol generating device 1. The power source 11 may be a rechargeable battery or a disposable battery. For example, the power supply 11 may be a lithium polymer (LiPoly) battery, but is not limited thereto.

Although not shown in FIG. 1, the aerosol generating device 1 may further include a power protection circuit. The power protection circuit may be electrically connected to the power source 11 and may include a switching element.

The power protection circuit may cut off an electrical path for the power source 11 according to a certain condition. For example, the power protection circuit may cut off the electrical path for the power source 11 when a voltage level of the power source 11 is a first voltage or more corresponding to overcharging. For example, the power protection circuit may cut off the electrical path for the power source 11 when the voltage level of the power source 11 is less than a second voltage corresponding to over-discharge.

The heater 18 may be supplied with power from the power source 11 and heat a medium or an aerosol generating material within the stick S. Although not shown in FIG. 1, the aerosol generating device 1 may further include a power conversion circuit (e.g., a DC/DC converter) that converts power of the power source 11 and supplies the converted power to the cartridge heater 24 and/or the heater 18. In addition, when the aerosol generating device 1 generates an aerosol by an induction heating method, the aerosol generating device 1 may further include a DC/AC converter that converts DC power of the power source 11 into AC power.

The controller 12, the sensor 13, the output unit 14, the input unit 15, the communicator 16, and the memory 17 may be supplied with power from the power source 11 to perform functions. Although not shown in FIG. 1, the aerosol generating device 1 may further include a power conversion circuit that converts power of the power source 11 and supplies the power to each of components, e.g., a low-dropout (LDO) circuit or a voltage regulator circuit. Also, although not shown in FIG. 1, a noise filter may be provided between the power source 11 and the heater 18. The noise filter may be a low pass filter. The low pass filter may include at least one inductor and a capacitor. A cutoff frequency of the low pass filter may correspond to a frequency of a high-frequency switching current applied from the power source 11 to the heater 18. The low pass filter may prevent a high-frequency noise component from being applied to the sensor 13, such as the insertion detection sensor 11033.

In an embodiment, the cartridge heater 24 and/or the heater 18 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. In addition, the heater 18 may be implemented by a metal wire, a metal plate on which an electrically conductive track is arranged, or a ceramic heating element, but is not limited thereto.

In an embodiment, the heater 18 may include an induction heater. For example, the heater 18 may include a susceptor that generates heat through a magnetic field applied by a coil to heat an aerosol generating material.

The input unit 15 may receive information input from the user or output the information to the user. For example, the input unit 15 may be a touch panel. The touch panel may include at least one touch sensor for detecting a touch. For example, the touch sensor may include a capacitive touch sensor, a resistive touch sensor, a surface acoustic touch sensor, an infrared touch sensor, or the like, but is not limited thereto.

The display 11041 and the touch panel may be implemented as one panel. For example, the touch panel may be inserted into the display 11041 (e.g., may be an on-cell type or in-cell type). For example, the touch panel may be added on the display 11041 (e.g., may be an add-on type).

Meanwhile, the input unit 15 may include a button, a keypad, a dome switch, a jog wheel, a jog switch, or the like, but is not limited thereto.

The memory 17 may be hardware for storing various types of data processed within the aerosol generating device 1 and may store pieces of data processed by the controller 12 and pieces of data to be processed by the controller 12. The memory 17 may include at least one type of storage medium from among a flash memory type, a hard disk type, a multimedia card micro type, a card type memory (e.g., a SD or XD memory or the like), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 17 may store data or the like regarding an operation time of the aerosol generating device 1, the maximum number of puffs, the current number of puffs, at least one temperature profile, and a smoking pattern of the user.

The communicator 16 may include at least one component for communication with another electronic device. For example, the communicator 16 may include at least one of a short-range wireless communication unit and a wireless communication unit.

The short-range wireless communication unit may include a Bluetooth communication unit, a Bluetooth low energy (BLE) communication unit, a near field communication unit, a wireless local area network ((WLAN) (Wi-Fi)) communication unit, a Zigbee communication unit, an infrared data association (IrDA) communication unit, a Wi-Fi Direct (WFD) communication unit, an ultra wideband (UWB) communication unit, an Ant+ communication unit, and the like, but is not limited thereto.

The wireless communication unit may include a cellular network communication unit, an Internet communication unit, a computer network (e.g., LAN or WAN) communication unit, and the like, but is not limited thereto.

Although not shown in FIG. 1, the aerosol generating device 1 may further include a connection interface such as a universal serial bus (USB) interface, and may connect with another external device through the connection interface such as a USB interface to transmit and receive information or charge the power 11.

The controller 12 may control an overall operation of the aerosol generating device 1. In an embodiment, the controller 12 may include at least one processor. The processor may be implemented as an array of a plurality of logic gates or may be implemented as a combination of a general-purpose microprocessor and a memory that stores a program executable by the microprocessor. In addition, one of ordinary skill in the art to which the present embodiment pertains may understand that the processor may be implemented as other types of hardware.

The controller 12 may control the temperature of the heater 18 by controlling supply power from the power source 11 to the heater 18. The controller 12 may control the temperature of the cartridge heater 24 and/or the heater 18 on the basis of the temperature of the cartridge heater 24 and/or the heater 18 sensed by the temperature sensor 11031. The controller 12 may adjust power supplied to the cartridge heater 24 and/or the heater 18, on the basis of the temperature of the cartridge heater 24 and/or the heater 18. For example, the controller 12 may determine a target temperature for the cartridge heater 24 and/or the heater 18, on the basis of a temperature profile stored in the memory 17.

The aerosol generating device 1 may include a power supply circuit (not shown) electrically connected to the power source 11 between the power source 11 and the cartridge heater 24 and/or the heater 18. The power supply circuit may be electrically connected to the cartridge heater 24, the heater 18, or an induction coil. The power supply circuit may include at least one switching element. The switching element may be implemented by a bipolar junction transistor (BJT), a field effective transistor (FET), or the like. The controller 12 may control the power supply circuit.

The controller 12 may control power supply by controlling switching of the switching element of the power supply circuit. The power supply circuit may be an inverter that converts DC power output from the power source 11 into AC power. For example, the inverter may include a full-bridge circuit or a half-bridge circuit including a plurality of switching elements.

The controller 12 may turn on the switching element so that power is supplied from the power source 11 to the cartridge heater 24 and/or the heater 18. The controller 12 may turn off the switching element to cut off the supply of power to the cartridge heater 24 and/or the heater 18. The controller 12 may adjust a current supplied from the power source 11 by adjusting a frequency and/or duty ratio of a current pulse input into the switching element.

The controller 12 may control a voltage output from the power source 11 by controlling switching of the switching element of the power supply circuit. The power conversion circuit may convert the voltage output from the power source 11. For example, the power conversion circuit may include a buck-converter that steps down the voltage output from the power source 11. For example, the power conversion circuit may be implemented through a buck-boost converter, a zener diode, or the like.

The controller 12 may adjust a level of the voltage output from the power conversion circuit by controlling an on/off operation of the switching element included in the power conversion circuit. When the switching element continues to be turned on, the level of the voltage output from the power conversion circuit may correspond to a level of a voltage output from the power source 11. The duty ratio for the on/off operation of the switching element may correspond to a ratio of the voltage output from the power conversion circuit to the voltage output from the power source 11. The level of the voltage output from the power conversion circuit may decrease with a decrease in the duty ratio for the on/off operation of the switching element. The heater 18 may be heated on the basis of the voltage output from the power conversion circuit.

The controller 12 may control power to be supplied to the heater 18 by using at least one of a pulse width modulation (PWM) method and a proportional-integral-differential (PID) method.

For example, the controller 12 may control a current pulse having a certain frequency and duty ratio to be supplied to the heater 18 by using the PWM method. The controller 12 may control the power supplied to the heater 18 by adjusting the frequency and duty ratio of the current pulse.

For example, the controller 12 may determine a target temperature to be controlled, on the basis of the temperature profile. The controller 12 may control the power supplied to the heater 18 by using the PID method, which is a feedback control method through a difference value between the temperature of the heater 18 and the target temperature, a value obtained by integrating the difference value over time, and a value obtained by differentiating the difference value over time.

The controller 12 may prevent the cartridge heater 24 and/or the heater 18 from overheating. For example, on the basis that the temperature of the cartridge heater 24 and/or the heater 18 exceeds a preset limit temperature, the controller 12 may control an operation of the power conversion circuit so that the supply of power to the cartridge heater 24 and/or the heater 18 stops. For example, on the basis that the temperature of the cartridge heater 24 and/or the heater 18 exceeds the preset limit temperature, the controller 12 may reduce an amount of power supplied to the cartridge heater 24 and/or the heater 18 by a certain ratio. For example, on the basis that the temperature of the cartridge heater 24 exceeds the preset limit temperature, the controller 12 may determine that the aerosol generating material accommodated in the cartridge 19 is exhausted and cut off the power supply to the cartridge heater 24.

The controller 12 may control charging and discharging of the power source 11. The controller 12 may identify the temperature of the power source 11 on the basis of an output signal of the temperature sensor 11031.

When a power line is connected to a battery terminal of the aerosol generating device 1, the controller 12 may identify whether or not the temperature of the power source 11 is a first limit temperature or more which is a reference for blocking charging of the power source 11. When the temperature of the power source 11 is less than the first limit temperature, the controller 12 may control the power source 11 to be charged, on the basis of a preset charging current. The controller 12 may block charging of the power source 11 when the temperature of the power source 11 is the first limit temperature or more.

While the power of the aerosol generating device 1 is turned on, the controller 12 may identify whether or not the temperature of the power source 11 is a second limit temperature or more which is a reference for blocking discharge of the power source 11. The controller 12 may control power stored in the power source 11 to be used when the temperature of the power source 11 is less than the second limit temperature. When the temperature of the power source 11 is the second limit temperature or more, the controller 12 may stop using the power stored in the power source 11.

The controller 12 may calculate a remaining capacity of the power stored in the power source 11. For example, the controller 12 may calculate the remaining capacity of the power source 11 on the basis of a voltage and/or current sensing value of the power source 11.

The controller 12 may determine, through the insertion detection sensor 11033, whether or not the stick S is inserted into the insertion space. The controller 12 may determine that the stick S is inserted, on the basis of the output signal of the insertion detection sensor 11033. When determining that the stick S is inserted into the insertion space, the controller 12 may control power to be supplied to the cartridge heater 24 and/or the heater 18. For example, the controller 12 may supply power to the cartridge heater 24 and/or the heater 18, on the basis of the temperature profile stored in the memory 17.

The controller 12 may determine whether or not the stick S is removed from the insertion space. For example, the controller 12 may determine, through the insertion detection sensor 11033, whether or not the stick S is removed from the insertion space. For example, when the temperature of the heater 18 is the preset limit temperature or more or when a temperature change gradient of the heater 18 is a set gradient, the controller 12 may determine that the stick S is removed from the insertion space. When determining that the stick S is removed from the insertion space, the controller 12 may cut off the supply of power to the cartridge heater 24 and/or the heater 18.

The controller 12 may control a power supply time and/or a power supply amount with respect to the heater 18, according to a state of the stick S detected by the sensor 13. The controller 12 may identify, on the basis of a look-up table, a level range including a level of a signal of the capacitance sensor. The controller 12 may determine an amount of moisture in the stick S, according to the identified level range.

When the stick S is over-humidified, the controller 12 may increase a preheating time of the stick S compared to a normal state by controlling the power supply time with respect to the heater 18.

The controller 12 may determine, through the reuse detection sensor 11034, whether or not the stick S inserted into the insertion space is reused. For example, the controller 12 may compare a sensing value of a signal of the reuse detection sensor 11034 with a first reference range including a first color and when the sensing value is included in the first reference range, determine that the stick S is not used. For example, the controller 12 may compare the sensing value of the signal of the reuse detection sensor 11034 with a second reference range including a second color and when the sensing value is included in the second reference range, determine that the stick S is used. When determining that the stick S is used, the controller 12 may cut off the supply of power to the cartridge heater 24 and/or the heater 18.

The controller 12 may determine, through the cartridge detection sensor 11035, whether or not the cartridge 19 is coupled and/or removed. For example, the controller 12 may determine whether or not the cartridge 19 is coupled or removed, on the basis of a sensing value of the signal of the cartridge detection sensor 11035.

The controller 12 may determine whether or not the aerosol generating material of the cartridge 19 is exhausted. For example, the controller 12 may apply power to preheat the cartridge heater 24 and/or the heater 18, determine whether or not the temperature of the cartridge heater 24 exceeds the limit temperature in a preheating period, and when the temperature of the cartridge heater 24 exceeds the limit temperature, determine that the aerosol generating material of the cartridge 19 is exhausted. When determining that the aerosol generating material of the cartridge 19 is exhausted, the controller 12 may cut off the supply of power to the cartridge heater 24 and/or the heater 18.

The controller 12 may determine whether or not the cartridge 19 may be usable. When the current number of puffs is greater than or equal to the maximum number of puffs set in the cartridge 19, the controller 12 may determine, on the basis of data stored in the memory 17, that the cartridge 19 may not be usable. For example, when the total time for which the heater 24 is heated is a preset maximum time or more or the total amount of power supplied to the heater 24 is a preset maximum amount of power or more, the controller 12 may determine that the cartridge 19 may not be usable.

The controller 12 may determine inhalation by the user through the puff sensor 11032. For example, the controller 12 may determine whether or not a puff occurs, on the basis of a sensing value of a signal of the puff sensor 11032. For example, the controller 12 may determine an intensity of the puff, on the basis of the sensing value of the signal of the puff sensor 11032. When the number of puffs reaches the preset maximum number of puffs or when puffs are not detected for a preset time or more, the controller 12 may cut off the supply of power to the cartridge heater 24 and/or the heater 18.

The controller 12 may determine, through the cap detection sensor 11036, whether a cap is coupled and/or removed. For example, the controller 12 may determine whether or not the cap is coupled and/or removed, on the basis of a sensing value of a signal of the cap detection sensor 11036.

The controller 12 may control the output unit 14 on the basis of the result of detection by the sensor 13. For example, when the number of puffs counted through the puff sensor 11032 reaches a preset number, the controller 12 may notify the user that the aerosol generating device 1 is soon terminated, through at least one of the display 11041, the haptic unit 11042, and the sound output unit 11043. For example, the controller 12 may notify the user through the output unit 14 that the stick S is not present in the insertion space, on the basis of the determination that the stick S is not present in the insertion space. For example, the controller 12 may notify the user through the output unit 14 that the cartridge 19 and/or the cap are not mounted, on the basis of the determination that the cartridge 19 and/or the cap are not mounted. For example, the controller 12 may transmit information regarding the temperature of the cartridge heater 24 and/or the heater 18 to the user through the output unit 14.

The controller 12 may store and update, in the memory 17, a history of a certain event that occurs, on the basis of the occurrence of the event. The event may include detection of insertion of the stick S, initiation of heating of the stick S, detection of puffs, termination of the puffs, detection of overheating of the cartridge heater 24 and/or the heater 18, detection of application of an overvoltage to the cartridge heater 24 and/or the heater 18, termination of heating of the stick S, an operation such as power on/off of the aerosol generating device 1, initiation of charging of the power source 11, detection of overcharging of the power source 11, termination of charging of the power source 11, and the like. The history of the event may include a date and time when the event occurs, log data corresponding to the event, and the like. For example, when the certain event is the detection of insertion of the stick S, the log data corresponding to the event may include data regarding the sensing value of the insertion detection sensor 11033 and the like. For example, when the certain event is the detection of overheating of the cartridge heater 24 and/or the heater 18, the log data corresponding to the event may include data regarding the temperature of the cartridge heater 24 and/or the heater 18, the voltage applied to the cartridge heater 24 and/or the heater 18, a current flowing through the cartridge heater 24 and/or the heater 18, and the like.

The controller 12 may control to form a communication link with an external device such as a mobile terminal of the user. When data regarding authentication is received from the external device through the communication link, the controller 12 may release a restriction on use of at least one function of the aerosol generating device 1. Here, the data regarding the authentication may include data indicating completion of user authentication for the user corresponding to the external device. The user may perform the user authentication through the external device. The external device may determine whether or not user data is valid, on the basis of the birthday of the user, a unique number indicating the user, and the like and receive, from an external server, data regarding use authority over the aerosol generating device 1. The external device may transmit the data indicating the completion of the user authentication to the aerosol generating device 1, on the basis of the data regarding the use authority. When the user authentication is completed, the controller 12 may release the restriction on the use of at least one function of the aerosol generating device 1. For example, when the user authentication is completed, the controller 12 may release a restriction on use of a heating function of supplying power to the heater 18.

The controller 12 may transmit data regarding the state of the aerosol generating device 1 to the external device through the communication link formed with the external device. On the basis of the received data regarding the state of the aerosol generating device 1, the external device may output the remaining capacity of the power source 11 of the aerosol generating device 1, an operation mode, and the like through a display of the external device.

The external device may transmit a location search request to the aerosol generating device 1, on the basis of an input for initiating a location search of the aerosol generating device 1. When receiving the location search request from the external device, the controller 12 may control at least one of output devices to perform an operation corresponding to the location search, on the basis of the received location search request. For example, the haptic unit 11042 may generate vibration in response to the location search request. For example, the display 11041 may output an object corresponding to the location search and an end of the search in response to the location search request.

When receiving firmware data from the external device, the controller 12 may control to perform a firmware update. The external device may identify a current version of firmware of the aerosol generating device 1 and determine whether or not a new version of the firmware is present. When an input for requesting firmware download is received, the external device may receive a new version of firmware data and transmit the new version of firmware data to the aerosol generating device 1. When receiving the new version of firmware data, the controller 12 may control the firmware update of the aerosol generating device 1 to be performed.

The controller 12 may transmit data regarding a sensing value of at least one sensor 13 to the external server (not shown) through the communicator 16, and receive from the server and store a learning model generated by learning the sensing value through machine learning such as deep learning. The controller 12 may perform an operation of determining an inhalation pattern of the user, an operation of generating a temperature profile, and the like by using the learning model received from the server. The controller 12 may store, in the memory 17, sensing value data of at least one sensor 13, data for training an artificial neural network (ANN), and the like. For example, the memory 17 may store a database for each component provided in the aerosol generating device 1, which is for training the ANN, and weights and biases constituting the structure of the ANN. The controller 12 may generate at least one learning model used for determining the inhalation pattern of the user, generating the temperature profile, and the like, by learning data regarding the sensing value of the at least one sensor 13, the inhalation pattern of the user, the temperature profile, and the like which are stored in the memory 17.

Any of the embodiments or other embodiments of the present disclosure described above are not mutually exclusive or distinct. Any of the embodiments or other embodiments of the present disclosure described above may be combined or combined in their respective configurations or functions.

For example, it means that the A configuration described in a specific embodiment and/or the drawings and the B configuration described in another embodiment and/or the drawings may be combined. That is, even if the combination between the configurations is not directly described, it means that the combination is possible, except in cases where the combination is described as impossible.

The above detailed description should not be construed as limiting in all respects, but should be considered as illustrative. The scope of the present disclosure should be determined by a reasonable interpretation of the appended claims, and all changes within the equivalent scope of the present disclosure are included in the scope of the present disclosure.

## Claims

1. An aerosol generating device comprising:
a housing comprising a first accommodation space for accommodating an aerosol generating article, a second accommodation space for accommodating a cartridge in which an aerosol generating material is stored, and a battery accommodation space;
a first airflow passage arranged inside the housing and connecting the first accommodation space and the second accommodation space to each other;
a first heat dissipation member arranged between the first airflow passage and the battery accommodation space to absorb heat inside the battery accommodation space; and
a battery detachably coupled to the battery accommodation space.

2. The aerosol generating device of claim 1, further comprising a second airflow passage connecting the outside of the aerosol generating device and the battery accommodation space to each other.

3. The aerosol generating device of claim 2, wherein the housing further comprises one or more air holes passing through the housing, and
the second airflow passage is arranged such that external air introduced into the battery accommodation space moves to the outside of the aerosol generating device through the air holes.

4. The aerosol generating device of claim 2, wherein the second airflow passage is arranged such that external air introduced into the battery accommodation space moves along an edge of the battery accommodation space and then moves to the outside of the aerosol generating device.

5. The aerosol generating device of claim 2, wherein the second airflow passage is arranged such that external air introduced into the battery accommodation space moves in a spiral direction along an outer surface of the battery accommodation space and then moves to the outside of the aerosol generating device.

6. The aerosol generating device of claim 2, wherein the second airflow passage is formed in a shape which is bent a plurality of times in a direction parallel to a lengthwise direction of the housing, in a vertical direction, or in a diagonal direction.

7. The aerosol generating device of claim 2, wherein one area of the airflow passage comprises a structure having a mesh shape, and
the structure comprises at least one of metal, plastic, and polyethylene terephthalate (PET).

8. The aerosol generating device of claim 1, further comprising a battery cover arranged in one area of the housing, to open and close the battery accommodation space.

9. The aerosol generating device of claim 8, wherein the battery cover comprises:
an external battery cover forming the exterior of the battery cover;
an internal battery cover formed in the center of inside the battery cover to press the battery toward the housing when the battery is coupled to the battery accommodation space; and
a protrusion arranged along an inside edge of the battery cover.

10. The aerosol generating device of claim 9, wherein the housing further comprises a groove into which the protrusion is inserted when the battery cover is coupled to the housing.

11. The aerosol generating device of claim 10, wherein the housing further comprises a second heat dissipation member positioned between the protrusion and the groove when the protrusion is inserted into the groove, and ensuring absorption of heat inside the accommodation space.

12. The aerosol generating device of claim 8, wherein one area of the battery cover comprises a structure having a mesh shape, and
the structure comprises at least one of metal, plastic, and polyethylene terephthalate.
